(19) **Europäisches Patentamt / European Patent Office / Office européen des brevets**

(11) **EP 4 307 180 A1**

(12) # EUROPEAN PATENT APPLICATION
published in accordance with Art. 153(4) EPC

(43) Date of publication:
**17.01.2024 Bulletin 2024/03**

(21) Application number: **23730347.4**

(22) Date of filing: **29.03.2023**

(51) International Patent Classification (IPC):
***G06N 10/00*** *(2022.01)*

(86) International application number:
**PCT/CN2023/084688**

(87) International publication number:
**WO 2023/231543 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.05.2022 CN 202210602826**

(71) Applicant: **TENCENT TECHNOLOGY (SHENZHEN) COMPANY LIMITED**
**Shenzhen, Guangdong 518057 (CN)**

(72) Inventors:
• **YUAN, Pei**
**Shenzhen, Guangdong 518057 (CN)**
• **ZHANG, Sheng Yu**
**Shenzhen, Guangdong 518057 (CN)**

(74) Representative: **Gunzelmann, Rainer**
**Wuesthoff & Wuesthoff**
**Patentanwälte PartG mbB**
**Schweigerstraße 2**
**81541 München (DE)**

(54) **QUANTUM STATE PREPARATION CIRCUIT GENERATION METHOD, QUANTUM STATE PREPARATION METHOD, AND QUANTUM DEVICE**

(57) Disclosed are a method for generating a quantum state preparation circuit, a quantum state preparation method, and a quantum device. The method for generating the quantum state preparation circuit includes: configuring, based on circuit preparation parameters of the quantum state preparation circuit, an input register for the quantum state preparation circuit and determining the number of auxiliary quantum bits (302); configuring a copy register and a target register for the quantum state preparation circuit according to the number of the auxiliary quantum bits (304); obtaining a diagonal unitary matrix quantum circuit by performing circuit construction through the input register, the copy register and the target register according to a quantum bit copy mode, the quantum bit copy mode being obtained based on a grid restriction condition (306); combining the diagonal unitary matrix quantum circuit and a single bit quantum gate to obtain a uniformly controlled gate circuit corresponding to the diagonal unitary matrix quantum circuit (308); and generating the quantum state preparation circuit based on the at least one uniformly controlled gate circuit (310). Influence of de-coherence can be reduced by adopting the method.

FIG. 3

**Description**

RELATED APPLICATION

This application claims priority to Chinese Patent Application No. 202210602826X, entitled "Method for Generating Quantum State Preparation Circuit, Quantum State Preparation Method, and Quantum Device" filed on May 30, 2022, which is incorporated by reference in its entirety.

FIELD OF THE TECHNOLOGY

The present disclosure relates to the technical field of quantum computing, in particular to a method for generating a quantum state preparation circuit, a quantum state preparation method, and a quantum device.

BACKGROUND OF THE DISCLOSURE

With development of a quantum computing technology, a quantum state preparation technology has emerged. Quantum state preparation refers to loading data that meets a given condition into a quantum state to obtain quantum state data.

In a conventional technology, a quantum state preparation circuit is designed based on the number of input quantum bits without any restrictions, so as to obtain the quantum state preparation circuit, and then quantum state preparation is performed based on the quantum state preparation circuit.

However, physical implementation of an existing quantum device has de-coherence. That is to say, with increase of time, coherence of a quantum system will gradually disappear and the quantum system degenerates into a classical system. When connectivity of quantum bits in the quantum device is limited by a grid structure, a depth of the quantum state preparation circuit obtained by using the conventional technology is large, which will lead to emergence of a de-coherence phenomenon and affect the quantum state preparation.

SUMMARY

According to various embodiments provided by the present disclosure, a quantum state preparation circuit generation method and apparatus, a computer device, a computer-readable storage medium, and a computer program product are provided, and a quantum state preparation method and apparatus, a computer device, a computer-readable storage medium, a computer program product, and a quantum device are provided.

In a first aspect, the present disclosure provides a method for generating a quantum state preparation circuit, executed by a computer device, and including: configuring, based on circuit preparation parameters of the quantum state preparation circuit, an input register for the quantum state preparation circuit and determining the number of auxiliary quantum bits;

configuring a copy register and a target register for the quantum state preparation circuit according to the number of the auxiliary quantum bits;

obtaining a diagonal unitary matrix quantum circuit by performing circuit construction through the input register, the copy register and the target register according to a quantum bit copy mode, the quantum bit copy mode being obtained based on a grid restriction condition;

combining the diagonal unitary matrix quantum circuit and a single bit quantum gate to obtain a uniformly controlled gate circuit corresponding to the diagonal unitary matrix quantum circuit; and

generating the quantum state preparation circuit based on the at least one uniformly controlled gate circuit.

In a second aspect, the present disclosure further provides an apparatus for generating a quantum state preparation circuit. The apparatus includes:

a first configuring module, configured to configure, based on circuit preparation parameters of the quantum state preparation circuit, an input register for the quantum state preparation circuit and determine the number of auxiliary quantum bits;

a second configuring module, configured to configure a copy register and a target register for the quantum state preparation circuit according to the number of the auxiliary quantum bits;

a circuit construction module, configured to obtain a diagonal unitary matrix quantum circuit by performing circuit construction through the input register, the copy register and the target register according to a quantum bit copy mode, the quantum bit copy mode being obtained based on a grid restriction condition;

a circuit combining module, configured to combine the diagonal unitary matrix quantum circuit and a single bit quantum gate to obtain a uniformly controlled gate circuit corresponding to the diagonal unitary matrix quantum circuit; and

a processing module, configured to generate the quantum state preparation circuit based on the at least one uniformly controlled gate circuit.

In a third aspect, the present disclosure further provides a computer device. The computer device includes a memory and a processor, the memory stores a computer readable instruction, and the processor, when executing the computer readable instruction, implements the steps of the method for generating the quantum state preparation circuit above.

In a fourth aspect, the present disclosure further provides a computer-readable storage medium. The computer-readable storage medium stores a computer readable instruction, and the computer readable instruction, when executed by a processor, implements the steps of the method for generating the quantum state preparation circuit above.

In a fifth aspect, the present disclosure further provides a computer program product. The computer program product includes a computer readable instruction, the computer readable instruction, when executed by a processor, implements the steps of the method for generating the quantum state preparation circuit above.

In a sixth aspect, the present disclosure provides a quantum state preparation method, executed by a quantum computer, and including:

obtaining quantum state data by performing quantum state preparation on circuit initial state data based on a quantum state preparation circuit, the quantum state preparation circuit being implemented through the method for generating the quantum state preparation circuit above.

In a seventh aspect, the present disclosure provides a quantum state preparation apparatus. The apparatus includes:

a preparing module, configured to obtain quantum state data by performing quantum state preparation on circuit initial state data based on a quantum state preparation circuit, the quantum state preparation circuit being implemented through the method for generating the quantum state preparation circuit above.

In an eighth aspect, the present disclosure further provides a quantum computer. The quantum computer includes a memory and a processor, the memory stores a computer readable instruction, and the processor, when executing the computer readable instruction, implements the steps of the quantum state preparation method above.

In a ninth aspect, the present disclosure further provides a computer-readable storage medium. The computer-readable storage medium stores a computer readable instruction, and the computer readable instruction, when executed by a processor, implements the steps of the quantum state preparation method above.

In a tenth aspect, the present disclosure further provides a computer program product. The computer program product includes a computer readable instruction, the computer readable instruction, when executed by a processor, implements the steps of the quantum state preparation method above.

According to an eleventh aspect, the present disclosure provides a quantum device. The quantum device implements a quantum state preparation circuit through the method for generating the quantum state preparation circuit above.

Details of one or more embodiments of the present disclosure are provided in accompanying drawings and descriptions below. Other features, objectives, and advantages of the present disclosure become apparent from the specification, the accompanying drawings, and the claims.

BRIEF DESCRIPTION OF THE DRAWINGS

To describe technical solutions in the embodiments of the present disclosure or the conventional technology more clearly, the following briefly introduces the accompanying drawings required for describing the embodiments or the conventional technology. Apparently, the accompanying drawings in the following descriptions show merely embodiments of the present disclosure, and those ordinarily skilled in the art may still derive other accompanying drawings from these accompanying drawings without creative efforts.

FIG. 1 is a diagram of an application environment of a method for generating a quantum state preparation circuit in an embodiment.

FIG. 2 is a schematic diagram of limitations of quantum circuit grid constraints in an embodiment.

FIG. 3 is a schematic flowchart of a method for generating a quantum state preparation circuit in an embodiment.

FIG. 4 is a schematic diagram of $n_1 \times n_2$-grid restriction of $n_1 n_2$-quantum bit circuit in an embodiment.

FIG. 5 is a schematic diagram of path restriction in an embodiment.

FIG. 6 is a schematic diagram of a quantum circuit of any $n$-quantum bit in an embodiment.

FIG. 7 is a schematic diagram of a copy circuit under column restriction in an embodiment.

FIG. 8 is a schematic diagram of a controlled-NOT gate circuit in an embodiment.

FIG. 9 is a schematic diagram of steps of designing a quantum state preparation circuit in an embodiment.

FIG. 10 is a structural block diagram of an apparatus for generating a quantum state preparation circuit in an embodiment.

FIG. 11 is a diagram of an internal structure of a computer device in an embodiment.

DESCRIPTION OF EMBODIMENTS

Technical solutions in embodiments of the present disclosure are clearly and completely described below with reference to the accompanying drawings in the embodiments of the present disclosure. Apparently, the described embodiments are merely some rather than all of the embodiments of the present disclosure. All other embodiments obtained by those ordinarily skilled in the art based on the embodiments of the present disclosure without creative efforts shall fall within the protection scope of the present disclosure.

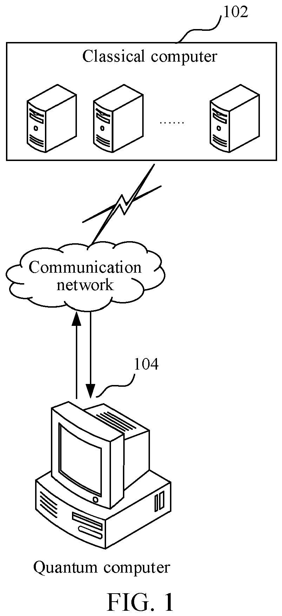

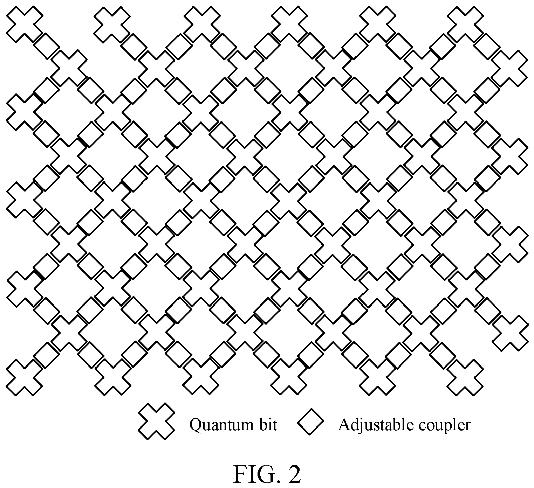

A method for generating a quantum state preparation circuit provided by an embodiment of the present disclosure may be applied to an application environment shown in FIG. 1, including a classical computer 102 and a quantum computer 104. The quantum computer 104 may communicate with the classical computer 102 through a network. The quantum computer is a kind of physical device that follows the laws of quantum mechanics to perform high-speed mathematical and logical operations, and store and process quantum information. The classical computer is relative to the quantum computer. The classical computer may also be called a general computer, and is a maturely-developed computing device at present. Quantum bits in the quantum computer may not be fully connected, and connectivity of the quantum bits in the quantum computer is limited, that is, only part of the quantum bits may be connected. The quantum computer can only execute quantum operation between quantum bit pairs having a connected relation or on a single quantum bit, that is, the quantum bits acted by a double bit quantum gate are limited by a graph. For example, as shown in FIG. 2, in the quantum computer, a quantum circuit is often restricted by grid constraints, and only two quantum bits connected through an adjustable coupler may act as one double bit quantum gate. A conventional design of a quantum state preparation circuit does not consider that in an actual quantum computer, connectivity of quantum bits is limited by a grid structure, and a depth of the designed quantum state preparation circuit is large, which will lead to a phenomenon of de-coherence and affect the quantum state preparation. Therefore, auxiliary quantum bits and combination techniques may be used to realize parallelization of the quantum state preparation circuit under constraints of a grid restriction condition, so as to obtain a quantum state preparation circuit with a circuit depth being effectively compressed, thereby minimizing the impact of de-coherence. In combination with an application scenario shown in FIG. 1, the method for generating the quantum state preparation circuit may be executed by the classical computer in FIG. 1.

In an embodiment, the classical computer is in communication connection with the quantum computer. The classical computer configures, based on one or more circuit preparation parameters of the quantum state preparation circuit, an input register for the quantum state preparation circuit and determines the number of auxiliary quantum bits; configures a copy register and a target register for the quantum state preparation circuit according to the number of the auxiliary quantum bits; obtains a diagonal unitary matrix quantum circuit by performing circuit construction through the input register, the copy register and the target register according to a quantum bit copy mode, the quantum bit copy mode being obtained based on a grid restriction condition; combines the diagonal unitary matrix quantum circuit and a single bit quantum gate to obtain at least one uniformly controlled gate circuit corresponding to the diagonal unitary matrix quantum circuit; and generates the quantum state preparation circuit based on the at least one uniformly controlled gate circuit, and sends a quantum program composed of the quantum state preparation circuit to the quantum computer for execution.

The classical computer 102 may be, but is not limited to, various personal computers, laptops, smart phones, tablet computers, IoT devices, and portable wearable devices. The IoT devices may be a smart speaker, a smart television, a smart air conditioner, a smart vehicle-mounted device, etc. The portable wearable devices may be a smart watch, a smart wristband, a headset device, etc. The quantum computer 104 is a kind of physical device that follows the laws of quantum mechanics to perform high-speed mathematical and logical operations, and store and process quantum information.

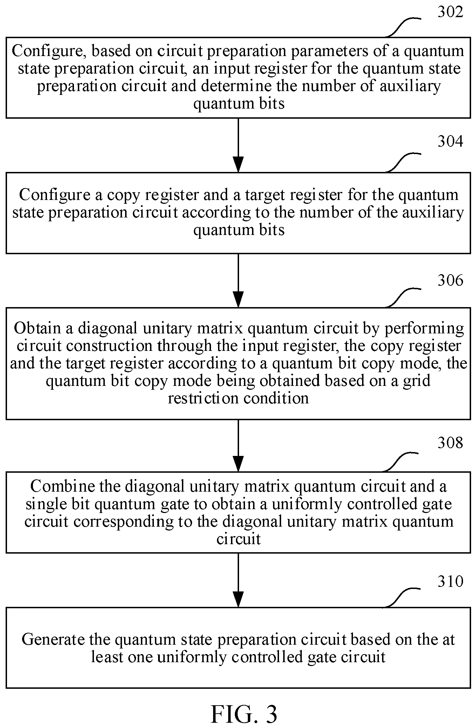

In an embodiment, as shown in FIG. 3, a method for generating a quantum state preparation circuit is provided. An example in which the method is applied to the classical computer 102 in FIG. 1 is used for description, and the method includes the following steps:

Step 302, Configure, based on circuit preparation parameters of the quantum state preparation circuit, an input register for the quantum state preparation circuit and determine the number of auxiliary quantum bits.

Quantum state preparation refers to loading data that meets a given condition into a quantum state to obtain quantum state data. The quantum state preparation circuit refers to a circuit used for preparing a quantum state. The quantum state preparation circuit in this embodiment is a quantum computing model, also known as a quantum circuit model, composed of a series of quantum bit gate sequences and computed by a quantum bit gate. The quantum state preparation circuit in this embodiment may be implemented by an actual quantum component, and each quantum bit gate in the quantum state preparation circuit corresponds to one operation of the actual quantum component. In specific applications, mathematical description of a quantum state preparation problem is as follows: given classical data (complex vector) $v = (v_0, v_1, \ldots, v_{2n-1}) \in \mathbb{C}^{2^n}$, the classic data meet $\|v\|_2 = 1$ (a module length of 1), a (n + m)-quantum state preparation circuitQSP is designed, and the circuit meets:

$$|0\rangle^{\otimes n}|0\rangle^{\otimes m} \xrightarrow{QSP} |\psi_v\rangle|0\rangle^{\otimes m},$$

Where, n is the number of input quantum bits, $|0\rangle^{\otimes n}$ is a given initial state, $|\psi_v\rangle = \sum_{k=0}^{2^n - 1} v_k|k\rangle$, $\{|k\rangle: k = 0,1, \ldots, 2^n - 1\}$ is a set of computing bases for a quantum system, $|0\rangle^{\otimes m}$ is m auxiliary quantum bits, and m is the number of the auxiliary quantum bits.

The quantum state preparation problem widely exists in various kinds of quantum machine learning algorithms, so efficient implementation of the quantum state preparation circuit (QSP) helps improve efficiency of the quantum machine learning algorithms. Moreover, physical implementation of an existing quantum device has de-coherence. That is to say, with increase of time, coherence of the quantum system will gradually disappear and the quantum system will ultimately degenerate into a classical system. Therefore, in order to minimize the impact of de-coherence as much as possible, it is necessary to parallelize the quantum circuit to reduce its circuit depth.

The quantum bits are basic units for storing data, and specific functions are achieved by performing corresponding operations on the quantum bits. In this embodiment, it is mainly to perform corresponding operations on the quantum bits to implement quantum state preparation. The quantum gate may change a state of the quantum bit it acts on, thus implementing a specific quantum operation. According to the number of the acting quantum bits, the quantum gate may be divided into a single bit quantum gate and a double bit quantum gate. The single bit quantum gate only acts on one specific quantum bit and may only change the state of the quantum bit. The double bit quantum gate acts on two quantum bits and may change the state of the two quantum bits, such as a controlled-NOT gate.

The circuit preparation parameters refer to parameters used for designing the quantum state preparation circuit. For example, the circuit preparation parameters may specifically include a preparation target of the quantum state preparation circuit and quantum bit parameters of a quantum computer. The preparation target is a target quantum state that needs to be prepared based on the quantum state preparation circuit. The quantum bit parameters include the total number of quantum bits and a quantum bit connected relation. The input register refers to an input quantum bit, namely, a set of quantum bits which store an input initial state. The input initial state refers to to-be-prepared data input to the quantum state preparation circuit. For example, the input initial state may specifically be a quantum bit string composed of any n-quantum bit, where *n* is the number of the input quantum bits. The number of the auxiliary quantum bits refers to the number of the auxiliary quantum bits in the quantum state preparation circuit. The quantum state preparation circuit includes the input register and the auxiliary quantum bits.

Specifically, the classical computer may determine, based on the circuit preparation parameters of the quantum state preparation circuit, the number of the input quantum bits, and thus configure the input register for the quantum state preparation circuit based on the number of the input quantum bits and the quantum bit connected relation. The number of the quantum bits in the input register is the same as the number of the input quantum bits. After determining the number of the input quantum bits, the classical computer may determine the number of the auxiliary quantum bits according to the number of the input quantum bits and the total number of the quantum bits. In a specific application, the classical computer may take a difference value between the total number of the quantum bits and the number of the input quantum bits as the number of the auxiliary quantum bits.

Step 304, Configure a copy register and a target register for the quantum state preparation circuit according to the number of the auxiliary quantum bits.

The copy register refers to a set of quantum bits that store copy data. The target register refers to a set of quantum bits that store an objective function needing to be implemented in a quantum state preparation process.

Specifically, the classical computer configures the copy register and the target register for the quantum state preparation circuit according to the number of the auxiliary quantum bits, that is, the auxiliary quantum bits are divided into the copy register and the target register. In a specific application, when the number of the auxiliary quantum bits is m, the number of the quantum bits in the copy register is m/2, and the number of the quantum bits in the target register is m/2. In another specific application, when the number of the auxiliary quantum bits is m, the number of the quantum bits in the copy register is m/3, and the number of the quantum bits in the target register is m/3. The remaining m/3 quantum bits in the auxiliary quantum bits are divided into an auxiliary register to assist in quantum state preparation and further compress the circuit depth.

Step 306, Obtain a diagonal unitary matrix quantum circuit by performing circuit construction through the input register, the copy register and the target register according to a quantum bit copy mode, the quantum bit copy mode being obtained based on a grid restriction condition.

The quantum bit copy mode refers to a mode of copying the quantum bits designed based on a grid restriction condition. Under the grid restriction condition, the controlled-Not gate can only act on two connected quantum bits. If a conventional copy mode is used for copying, it will result in a large depth of the copy circuit used for implementing copy. Therefore, it is necessary to design the copy circuit based on the grid restriction condition. For example, the quantum bit copy mode may specifically be to first perform column copying on the quantum bits, and then perform row copying based on a column copy result. The conventional copy mode is to first copy once to obtain a first copy result, then copy twice based on the first copy result to obtain a second copy result, and then copy for four times based on the second copy result to obtain a third copy result, thereby implement quantum bit copying in an iterative copy mode.

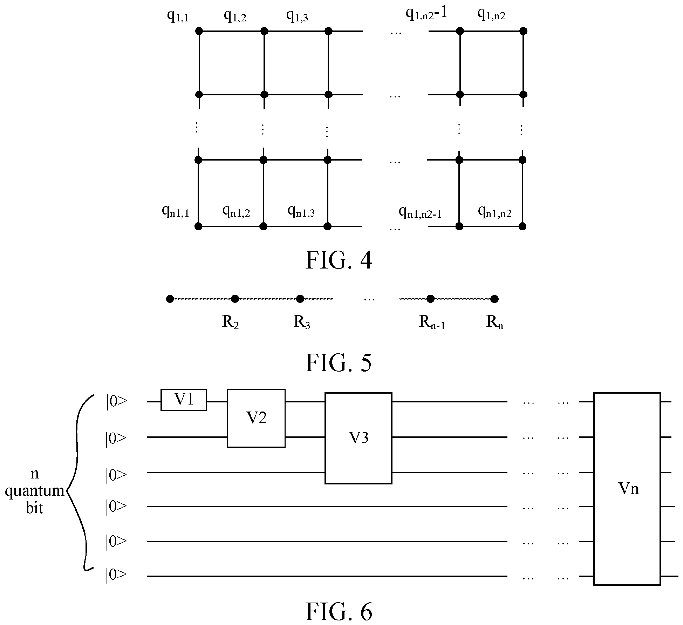

The grid restriction condition refers to the fact that in a quantum device, the quantum circuit is often restricted by grid constraints. For example, FIG. 4 represents a $n_1 \times n_2$-grid restriction of a $n_1 n_2$-quantum bit circuit, where $n_1$ refers to the number of single-column quantum bits in a grid, $n_2$ is the number of single-row quantum bits in the grid, and vertices $q_{1,1}$, $q_{1,2}$. ... , $q_{1,n1}$, ... , $q_{n1,n2}$ represent $n_1 \times n_2$ quantum bits respectively. If the two quantum bits are connected by an edge in the grid, the controlled-NOT gate may act on the two quantum bits. When $n_1$ or $n_2$ is 1, the grid restriction degenerates into path restriction (as shown in FIG. 5). In the present disclosure, it is assumed without loss of generality that $n_1 \geq n_2$. The diagonal unitary matrix quantum circuit refers to a quantum circuit that may be represented by a diagonal unitary matrix. For example, definition of the $n$-quantum bit diagonal unitary matrix is: $\Lambda_n =$

$$diag\left(1, e^{i\theta_1}, ..., e^{i\theta_{2^n-1}}\right) \in \mathbb{C}^{2^n \times 2^n}$$ , where, *diag* refers to a diagonal matrix, and $e^{i\theta_1}$, ..., $e^{i\theta_{2n-1}}$ and other matrix elements may be determined by splitting the quantum state preparation circuit based on a preparation target.

Specifically, the classical computer obtains the diagonal unitary matrix quantum circuit by performing circuit construction through the input register, the copy register and the target register according to the quantum bit copy mode. In specific application, the role of the diagonal unitary matrix quantum circuit is to implement the following transformations on each vector $|x\rangle$ of a set of computing bases of a quantum system: $|x\rangle \rightarrow e^{i\theta(x)}|x\rangle$, $\forall x \in \{0,1\}^n$, that is, for each vector $|x\rangle$ of one set of computing bases, a corresponding vector $e^{i\theta(x)}|x\rangle$ with a phase is outputted, where $e^{i\theta(x)}$ is a matrix element of the diagonal unitary matrix in the diagonal unitary matrix quantum circuit.

Based on this, parameters $\{\alpha_s : s \in \{0,1\}^n - \{0^n\}\}$ may be defined to meet: $\Sigma_s \langle s, x \rangle \alpha_s = \theta(x)$, $\forall x \in \{0,1\}^n - \{0^n\}$, where, $s$ and $x$ are quantum bit strings, $n$ is the number of the input quantum bits, $\alpha_s$ is the phase, and $\langle s, x \rangle$ represents an inner product of the quantum bit string $s$ and the quantum bit string $x$. Therefore, the diagonal unitary matrix quantum circuit may be implemented by generating all the phases $\alpha_s$ corresponding to $2^n$ quantum bit strings $s$. Each quantum bit strings in $2^n$ quantum bit strings $s$ has a corresponding phase $\alpha_s$. The inner product may be represented by a symbol $\langle x, y \rangle$, defined as $\bigoplus_{i=1}^n x_i y_i$ , where, x $= (x_1, ... , x_n)^T$, y $= (y_1, ... , y_n)^T \in \{0,1\}^n$, addition and multiplication are operations in a binary field.

In a specific application, the classical computer obtains the diagonal unitary matrix quantum circuit by performing circuit construction with all phases $\alpha_s$ corresponding to generation of $2^n$ quantum bit strings $s$ through the input register, the copy register and the target register according to the quantum bit copy mode. Further, the classical computer gradually generates each quantum bit string $s$ among the $2^n$ quantum bit strings s through the input register, the copy register, and the target register according to the quantum bit copy mode, and implement the corresponding phase $\alpha_s$ when generating each quantum bit string s.The phase $\alpha_s$ corresponding to each quantum bit string $s$ may be calculated according to $\Sigma_s\langle s, x\rangle\alpha_s = \theta(x)$. When $x$ may be taken from a non-zero quantum bit string, there will be a corresponding equation for each quantum bit string $x$. By concatenating all the equations, the phase $\alpha_s$ corresponding to each quantum bit string s may be obtained.

For example, in response to 2 quantum bits, the quantum bit string $s$ may be 01, 10 and 11, and the quantum bit string $x$ may also be 01, 10 and 11. For the quantum bit string $x$ being 01, the corresponding equation is $\langle 01,01\rangle\alpha_{s(01)}$ + $\langle 10,01\rangle\alpha_{s(10)}$ + $\langle 11,01\rangle\alpha s_{(11)}$ = $\theta(01)$, where (01,01), (10,01) and (11,01) are an inner product of each quantum bit string $s$ with the quantum bit string $x$ being 01, $\alpha_{s(01)}$, $\alpha_{s(10)}$ and $\alpha_{s(11)}$ respectively represent the phase $\alpha_s$ corresponding to each quantum bit string s.

Step 308, Combine the diagonal unitary matrix quantum circuit and a single bit quantum gate to obtain at least one uniformly controlled gate circuit corresponding to the diagonal unitary matrix quantum circuit.

The single bit quantum gate only acts on one specific quantum bit and may only change the state of the quantum bit. The uniformly controlled gate circuit refers to a quantum circuit that may be represented through a uniformly controlled gate. For example, the n-quantum bit uniformly controlled gate (UCG) is $V_n$ defined as:

$$V_n = diag(U_1, U_2, ..., U_{2^{n-1}}) \in \mathbb{C}^{2^n \times 2^n},$$

Where, for any $k \in [2^{n-1}]$, $U_k \in \mathbb{C}^{2\times 2}$ is a unitary matrix. The quantum circuit of any $n$-quantum bit may be decomposed into a combination of $n$uniformly controlled gates of different scales, namely, $\prod_{k=1}^{n}(V_k \otimes \mathbb{I}_{n-k})$, where $\mathbb{I}_{n-k}$ represents a unit operator of the $n - k$ quantum bit.Based on a circuit decomposition principle, the uniformly controlled gate may be decomposed into a diagonal unitary matrix and the single bit quantum gate when a global phase is ignored, that is, the uniformly controlled gate circuit includes the diagonal unitary matrix quantum circuit and the single bit quantum gate. For example, the uniformly controlled gate may be decomposed into a combination of three diagonal unitary matrices and four single bit quantum gates.

Specifically, since the quantum circuit of any $n$-quantum bit may be decomposed into the combination of $n$uniformly controlled gates with different scales, and the uniformly controlled gate may be decomposed into the combination of the diagonal unitary matrix and the single bit quantum gate, when designing the quantum state preparation circuit, the classical computer needs to decompose the quantum state preparation circuit in advance based on the circuit preparation parameters of the quantum state preparation circuit to decompose the quantum state preparation circuit into the combination of the uniformly controlled gates, and then decompose the uniformly controlled gate into the combination of the diagonal unitary matrix and the single bit quantum gate, so that the uniformly controlled gate circuit corresponding to the diagonal unitary matrix quantum circuit is obtained in a mode of performing circuit construction first to obtain the diagonal unitary matrix quantum circuit and then combining the diagonal unitary matrix quantum circuit and the single bit quantum gate.

Step 310, Generate the quantum state preparation circuit based on the at least one uniformly controlled gate circuit.

Specifically, since the quantum circuit with any $n$-quantum bit may be decomposed into the combination of the $n$uniformly controlled gates of different scales, after the classical computer decomposes the quantum state preparation circuit into the combination of the uniformly controlled gates, the quantum state preparation circuit may be generated based on the at least one uniformly controlled gate after obtaining the uniformly controlled gate circuit. For example, it is assumed that an initial state of the circuit is $|0\rangle^{\otimes n}$, a schematic diagram of the quantum circuit with any $n$-quantum bit may be decomposed into the combination of the $n$uniformly controlled gates of different scales, as shown in FIG. 6.

According to the above method for generating the quantum state preparation circuit, based on the circuit preparation parameters, the input register can be configured for the quantum state preparation circuit, and the number of the auxiliary quantum bits may be determined. Therefore, based on the number of the auxiliary quantum bits, the configuration of the copy register and the target register may be achieved. Circuit construction is performed through the input register, the copy register and the target register according to the quantum bit copy mode, so that the diagonal unitary matrix quantum circuit can be constructed using a combination technique in response to considering the constraints of the grid restriction condition, then the uniformly controlled gate circuit may be obtained by combining the diagonal unitary matrix quantum circuit and the single bit quantum gate, and the quantum state preparation circuit is generated based on the uniformly controlled gate circuit. In the whole process, the auxiliary quantum bits and the combination techniques are used to realize parallelization of the quantum state preparation circuit under the constraints of the grid restriction condition, so as to obtain the quantum state preparation circuit with a circuit depth being effectively compressed, thereby minimizing the impact of de-coherence.

In an embodiment, the quantum bit copy mode includes column copying of quantum bits under the grid restriction condition to obtain a column copy result, and row copying based on the column copy result.

Column copying refers to copying of the quantum bits in a column direction. Row copying refers to copying of the quantum bits in a row direction.

Specifically, the quantum bit copy mode includes column copying of the quantum bits under the grid restriction condition to obtain the column copy result, and parallel row copying based on the column copy result. In a specific application, column copying refers to single column copying, where the quantum bits are copied into a first column. Parallel row copying refers to copying the quantum bits in the first column into each row through an action of a controlled-NOT gate. Based on the grid restriction condition and the quantum bit copy mode, the circuit depth for implementing the quantum bit copy circuit may be determined. For example, under the $n_1 \times n_2$ grid restriction, for any $x = x_1 x_2 \cdots x_n \in$

$$|x\rangle|0^{n_1 n_2 - n}\rangle \to |x\rangle \underbrace{|x\rangle \cdots |x\rangle}_{\frac{n_1 n_2}{n} - 1 \, |x\rangle}$$

$\{0,1\}^n$, copy transformation , may be implemented by a controlled-NOT (CNOT) gate circuit with a depth of $O(n^2 + n_1 + n_2)$.

In a specific application, the quantum bit copy mode under the $n_1 \times n_2$ grid restriction may include the following two steps.

Step 1: Copy under first column restriction ($n_1$ - path restriction $n$), that is, implement the following transformation:

$$|x\rangle|0^{n_1 - n}\rangle \to |x\rangle \underbrace{|x\rangle \cdots |x\rangle}_{\frac{n_1}{n} - 1 \, |x\rangle},$$

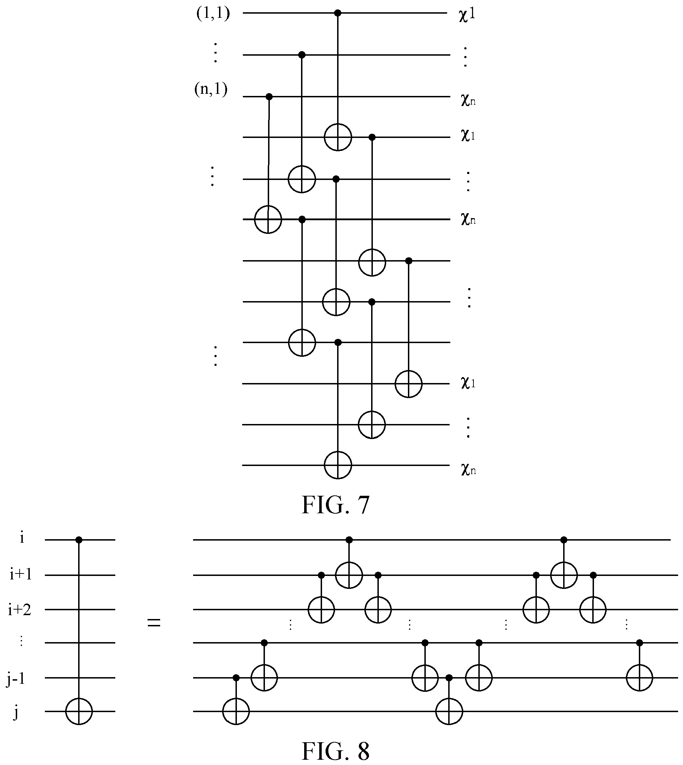

That is, $|x\rangle$ is copied onto $|0^{n1-n}\rangle$ quantum bits, the copying of the above transformation may be achieved through a copy circuit under the column restriction shown in FIG. 7. In the copy circuit under the column restriction, through the action of the controlled-NOT gate, $x_1...x_n$ is copied for ($n_1 - n$) times respectively, and each controlled-NOT gate is copied once. Where, a first controlled-NOT gate acts from ($n$, 1) to a location of ($2n$, 1), to achieve the copying of $x_n$. Further, from circuit implementation of the controlled-NOT gate under path restriction, it can be seen that each controlled-NOT gate in the copy circuit under column restriction may be implemented by a controlled-NOT gate circuit with a depth of $O(n)$ under the ($n + 1$)-path restriction. Therefore, under the $n_1$-path restrictions, the circuit depth of the above transformation is $O\left(n^2 + n \cdot (\frac{n_1}{n} - 1)\right) = O(n^2 + n_1)$ .

The circuit implementation of the controlled-NOT gate under the path restriction refers to that under the path restriction, $\text{CNOT}_j^i$ may be implemented by the CNOT circuit with both depth and size being $O(|i - j|)$ (as shown in FIG. 8, where a small black dot represents a control bit and a large circle represents a target bit), where $i$ is the control bit of the controlled-NOT gate, and $j$ is the target bit of the controlled-NOT gate. For example, in the copy circuit under the column restriction as shown in FIG. 7, the first controlled-NOT gate acts from ($n$, 1) to the location of ($2n$, 1), where ($n$, 1) is the control bit, and ($2n$, 1) is the target bit.

Step 2: Under the restriction of a $n_2$-path ($i$, 1) - ($i$, 2) - $\cdots$ - ($i$, $n_2$) ($i$ row of a grid), copy each quantum bit ($i$, 1) for $n_2$ - 1 times. For any $i \in [n_1]$, this step may be implemented by a quantum circuit $\prod_{j=1}^{n_2 - 1} CNOT_{(i,j+1)}^{(i,j)}$ with a depth of $O(n_2)$. Because the above $n_1$ path restrictions do not intersect, they may be implemented in parallel.

In this embodiment, by designing the quantum bit copy mode, based on the grid restriction condition, of performing column copying first and then performing row copying based on the column copy result, the circuit depth of the quantum bit copy circuit can be reduced, and the circuit depth of the quantum state preparation circuit is effectively compressed, thereby minimizing the impact of de-coherence.

In an embodiment, the input register includes a prefix-part quantum bit and a suffix-part quantum bit. The obtaining the diagonal unitary matrix quantum circuit by performing circuit construction through the input register, the copy register and the target register according to the quantum bit copy mode includes:

copy the suffix-part quantum bit in the input register according to the quantum bit copy mode to copy the suffix-part quantum bit into the copy register, so as to obtain a suffix copy stage circuit;

obtain a Gray initialization stage circuit by performing Gray initialization processing on the suffix-part quantum bit in the copy register and the target register;

copy the prefix-part quantum bit in the input register according to the quantum bit copy mode to copy the prefix-part quantum bit into the copy register, so as to obtain a prefix copy stage circuit;

obtain a Gray path stage circuit by performing Gray path processing on the prefix-part quantum bit in the copy register and the target register;

obtain an inversion processing stage circuit by performing inversion processing based on the suffix copy stage circuit, the Gray initialization stage circuit, the prefix copy stage circuit, and the Gray path stage circuit; and

obtain the diagonal unitary matrix quantum circuit based on the suffix copy stage circuit, the Gray initialization stage circuit, the prefix copy stage circuit, the Gray path stage circuit and the inversion processing stage circuit.

The input register includes the prefix-part quantum bit and the suffix-part quantum bit. For example, when the input register is a $n$-quantum bit, the prefix-part quantum bit refers to the first $n - p$ quantum bits in the input register, and the suffix-part quantum bit refers to the last $p$ quantum bits in the input register, where $n - p$ may be configured according to actual application scenarios. In a specific application, the number of the quantum bits in the prefix-part quantum bit and the suffix-part quantum bit may be the same or similar. For example, when the input register is a 4-quantum bit, the prefix-part quantum bit may be the first two quantum bits in the input register, and the suffix-part quantum bit refers to the last two quantum bits in the input register.

Gray initialization processing is mainly used for implementing an objective function and phase rotation matching the Gray initialization stage on each quantum bit of the target register. The objective function matching the Gray initialization stage implemented on each quantum bit is a linear function constituted based on the suffix-part quantum bit. For example, the objective function may be a function determined based on a pre-constructed quantum bit string set. The pre-constructed quantum bit string set is constructed based on a condition that the quantum bit string set needs to meet and a Gray code cycle.

In specific applications, the pre-constructed quantum bit string set $\{0,1\}^n$ corresponding to $n$-quantum bits may be divided into a two-dimensional array $\{s(j, k): j \in [2^{n-p}], k \in [2^p]\}$ composed of bit strings $n$, where, $p = \log_2(m/3)$, $m$ is the number of the auxiliary quantum bits, and the objective function matching the Gray initialization stage may specifically be $f_{1,k}(x) = (s(1, k), x)$, where $s(1, k)$ is the first row of bit strings in the two-dimensional array, and $x$ is the input register. Phase rotation is used for changing the phase of the implemented objective function, and the phase changed on each quantum bit may be determined based on the objective function matching the quantum bit.

Where, the Gray code cycle is a sequence of all $n$-bit strings in $\{0,1\}^n$, where the adjacent two bit strings in the sequence happen to have one different bit, and the first bit string and the last bit string in the sequence also happen to have one different bit. A construction mode of the Gray code cycle is illustrated below by examples. 1-The construction mode of the Gray code cycle is as follows: $x^1 = 0^n$ is defined, for each bit $i = 1,2, ..., 2^n - 1$, $x^{i+1}$ is obtained by flipping $t$ bit of $x^i$, where $t$ represents a label of different bits of $x^i$ and $x^{i+1}$ in the 1-Gray code cycle, $t$ meets $2^{t-1} | i$ and

$$2^t \nmid i.$$

For any $k \in [n]$, the construction mode of the $k$-Gray code cycle is: $y^1 = 0^n$ is defined, and for each $i = 1,2, ..., 2^n - 1$, if $t + k - 1 \leq n$, $y^{i+1}$ is obtained by flipping the $t + k - 1$ bit of $y^i$; and if $t + k - 1 > n$, $y^{i+1}$ is obtained by flipping the $t + k - 1 - n$ bit of $y^i$, where $t$ represents the label of different bits of $x^i$ and $x^{i+1}$ in the 1-Gray code cycle. For further examples, the 1-Gray code cycle for 2-bit strings may be 00, 01, 11, and 10.

In a specific application, the quantum bit string set needs to meet the following several conditions: the first is that the first $(n - p)$ bits of the bit string in the first row $\{s(1, k): k \in [2^p]\}$ of the array are all 0, and the bit string in each column $\{s(j, k): j \in [2^{n-p}]\}$ of the array have the same last $p$ bits. The second is that $\forall k \in [2^p]$, $\forall j \in [2^{n-p} - 1]$, $s(j, k)$ and $s(j + 1, k)$ happen to have one different bit. The third is that prefix-part bits of $\forall k \in [2^p]$, $\forall \ell \in \left\lceil \frac{2^{n-p}}{n-p} \right\rceil$, $s(1 + (\ell - 1)(n - p), k), s(2 + (\ell - 1)(n - p), k), \cdots, s(\ell(n - p), k)$ are 1-Gray code, 2-Gray code, ..., $n - p$ Gray code respectively.

Gray path processing is mainly used for implementing, at each processing stage, objective function transformation and phase rotation matching the current processing stage on each quantum bit of the target register. For example, at the first processing stage of the Gray path processing stage, it is mainly to transform the objective function implemented by performing Gray initialization processing. For another example, at the second processing stage of the Gray path processing stage, it is mainly to transform the transformed objective function obtained at the first processing stage. The objective function transformation here mainly refers to implementing a new objective function. For example, the objective function transformation may specifically be the implementation of a linear function constituted based on the prefix-part quantum bit. In specific applications, for the two-dimensional array divided by the pre-constructed quantum bit string set, the objective function transformation of each processing stage is to respectively implement an inner product of bit strings of different rows and the input register. For example, the objective function transformation implemented at the first processing stage is $f_{2,k}(x) = \langle s(2, k), x \rangle$, where $s(2, k)$ is the second row of bit strings in the two-dimensional array, and x is the input register.

Specifically, the classical computer divides the input register into the prefix-part quantum bit and the suffix-part quantum bit; copies the suffix-part quantum bit in the input register based on the quantum bit copy mode, and copies the suffix-part quantum bit into the copy register based on the suffix copy stage condition, to obtain the suffix copy stage circuit; then obtains the Gray initialization stage circuit by performing Gray initialization processing on the suffix-part quantum bit in the copy register and the target register so as to implement the objective function and phase rotation matching the Gray initialization stage on each quantum bit of the target register; then copies the prefix-part quantum bit in the input register according to the quantum bit copy mode to copy the prefix-part quantum bit into the copy register based on the prefix copy stage condition, so as to obtain the prefix copy stage circuit; and then obtains the Gray path stage circuit by performing Gray path processing on the prefix-part quantum bit in the copy register and the target register so as to implement, at each processing stage of Gray path processing, objective function transformation and phase rotation matching the current processing stage on each quantum bit of the target register.

The suffix copy stage condition refers to the number of the suffix-part quantum bits that need to be copied during the suffix copy stage, which may be configured based on actual application scenarios. For example, the number of the suffix-part quantum bits that need to be copied may be $n - p$, where $n$ is the number of the input quantum bits, $p = \log_2(m/3)$, and m is the number of the auxiliary quantum bits. The prefix copy stage condition refers to the number of the prefix-part quantum bits that need to be copied during the prefix copy stage, which may be configured based on actual application scenarios. For example, the number of the prefix-part quantum bits that need to be copied may be $n - p$, where $n$ is the number of the input quantum bits, $p = \log_2(m/3)$, and m is the number of the auxiliary quantum bits.

Specifically, because the role of the diagonal unitary matrix quantum circuit is to output a corresponding vector with a phase for each vector of a group of computing bases, after obtaining the Gray path stage circuit, the classical computer performs inversion processing based on the suffix copy stage circuit, the Gray initialization stage circuit, the prefix copy stage circuit and the Gray path stage circuit to restore the copy register and the target register, so as to obtain the inversion processing stage circuit, and then obtains the diagonal unitary matrix quantum circuit based on the suffix copy stage circuit, the Gray initialization stage circuit, the prefix copy stage circuit, the Gray path stage circuit and the inversion processing stage circuit.

In specific applications, performing inversion processing based on the suffix copy stage circuit, the Gray initialization stage circuit, the prefix copy stage circuit, and the Gray path stage circuit includes: perform inversion processing on the suffix copy stage circuit, the Gray initialization stage circuit, the prefix copy stage circuit, and the Gray path stage circuit respectively to obtain an inversion circuit corresponding to each stage, and combine the inversion circuit corresponding to each stage to obtain the inversion processing stage circuit.

For example, the inversion processing stage circuit may be represented as

$$U_{Inverse} = U_{copy,1}^{\dagger} U_1^{\dagger} U_{copy,1} U_{copy,2}^{\dagger} U_2^{\dagger} \cdots U_{2^{n-p}}^{\dagger}$$ , where $U_2^{\dagger} \cdots U_{2^{n-p}}^{\dagger}$ represents an inversion circuit corresponding to the Gray path stage circuit, $U_{copy,1} U_{copy,2}^{\dagger}$ represents an inversion circuit corresponding to the prefix copy stage circuit, $U_1^{\dagger}$ represents an inversion circuit corresponding to the Gray initialization stage circuit, and $U_{copy,1}^{\dagger}$

represents an inversion circuit corresponding to the suffix copy stage circuit. Where, $U_2^{\dagger} \cdots U_{2^{n-p}}^{\dagger}$ refers to that the inversion circuit corresponding to the Gray path stage circuit may be obtained by inverting each processing stage of Gray path processing.

For another example, the inversion processing stage circuit may also be represented as

$$U_{Inverse} = U_{copy,1}^{\dagger} U_1^{\dagger} U_{copy,1} U_{copy,2}^{\dagger} U_{2^{n-p+1}}$$ , where $U_{2^{n-p+1}}$ represents an inversion circuit corresponding to the Gray path stage circuit, $U_{copy,1}U_{copy,2}^{\dagger}$ represents an inversion circuit corresponding to the prefix copy stage circuit, $U_1^{\dagger}$ represents an inversion circuit corresponding to the Gray initialization stage circuit, and $U_{copy,1}^{\dagger}$ represents an inversion circuit corresponding to the suffix copy stage circuit. Where, $U_{2n-p+1}$ refers to that the inversion circuit corresponding to the Gray path stage circuit may be obtained by transforming the objective function obtained at the last processing stage of Gray path processing again. In specific applications, for the two-dimensional array divided by the pre-constructed quantum bit string set, the objective function transformation of each processing stage is to respectively implement the inner product of bit strings of different rows and the input register. The objective function transformation in the last processing stage is to implement the inner product of the last row of bit strings in the array and the input register, while the transformation of the objective function obtained at the last processing stage again refers to implementing the inner product of the first row of bit strings of the array and the input register.

In this embodiment, by performing suffix copy processing, Gray initialization processing, prefix copy processing, Gray path processing, and inversion processing according to the quantum bit copy mode, the diagonal unitary matrix quantum circuit can be constructed based on combinatorial techniques by using properties of the Gray code cycle, the copy register and the target register, thereby achieving circuit depth compression of the diagonal unitary matrix quantum circuit under the grid restriction condition.

In an embodiment, the copying the suffix-part quantum bit in the input register according to the quantum bit copy mode to copy the suffix-part quantum bit into the copy register, so as to obtain the suffix copy stage circuit includes:

perform column copying on the suffix-part quantum bit in the input register according to the quantum bit copy mode to copy the suffix-part quantum bit onto different quantum bits in the copy register, so as to obtain a first controlled-NOT gate circuit;

perform iterative copying on the suffix-part quantum bit that has been copied onto the different quantum bits in the copy register in a row direction until the quantity of the suffix-part quantum bit in the copy register meets a suffix copy stage condition, so as to obtain a second controlled-NOT gate circuit; and

obtain the suffix copy stage circuit based on the first controlled-NOT gate circuit and the second controlled-NOT gate circuit.

Specifically, the suffix copy stage is used for copying the suffix-part quantum bit in the input register into the copy register under the grid restriction condition. At this time, the classical computer performs one-time column copying on the suffix-part quantum bit in the input register according to the quantum bit copy mode to copy the suffix-part quantum bit onto different quantum bits of the single column in the copy register respectively, so as to obtain the first controlled-NOT gate circuit; then performs iterative copying on the suffix-part quantum bit that has been copied onto the different quantum bits of the single column in the copy register in the row direction until the quantity of the suffix-part quantum bit in the copy register meets the suffix copy stage condition, so as to obtain the second controlled-NOT gate circuit; and obtains the suffix copy stage circuit by combining the first controlled-NOT gate circuit and the second controlled-NOT gate circuit.

In a specific application, when performing iterative copying on the suffix-part quantum bit that has been copied onto the different quantum bits of the single column in the copy register in the row direction, the classical computer determines the number of rows to be copied in the row direction according to the quantity of the suffix-part quantum bits that need to be copied in the suffix copy stage condition, and the number of rows to be copied is the quantity of the suffix-part quantum bits to be copied in the suffix copy stage condition minus 1.

In this embodiment, by performing column copying first on the suffix-part quantum bit and then performing iterative copying in the row direction according to the quantum bit copy mode, the circuit depth of the suffix copy stage circuit can be reduced under the grid restriction condition, and the circuit depth of the quantum state preparation circuit is effectively compressed, thereby minimizing the impact of de-coherence.

In an embodiment, the obtaining the Gray initialization stage circuit by performing Gray initialization processing on the suffix-part quantum bit in the copy register and the target register includes:

obtain a third controlled-NOT gate circuit by implementing a matched objective function on each quantum bit of the target register through the suffix-part quantum bit in the copy register;

determine a first phase matching each quantum bit of the target register respectively based on the objective function matching each quantum bit;

obtain a first phase rotation circuit by implementing phase rotation of the matched first phase on each quantum bit of the target register; and

obtain the Gray initialization stage circuit based on the third controlled-NOT gate circuit and the first phase rotation circuit.

The matched objective function refers to the linear function constituted based on the suffix-part quantum bit. That is, when performing Gray initialization processing, it is necessary to first convert a state of the quantum bit in the target register into $\{a_1 x_{n-p+1} \oplus a_2 x_{n-p+2} \oplus \cdots \oplus a_p x_n: a_1, \ldots, a_p \in \{0,1\}\}$.

Where, $x_{n-p+1}, x_{n-p+2}, \ldots, x_n$ is the suffix-part quantum bit. In this process, the $k$ quantum bit in the target register is converted into $|f_{1,k}(x)\rangle$, where $f_{1,k}(x) = (s(1, k), x), s(1, k)$ represents the $k$ bit string in the first row of bit strings in the two-dimensional array $\{s(j, k): j \in [2^{n-p}], k \in [2^p]\}$ obtained by dividing the pre-constructed quantum bit string set, $x$ is the input register, where $p = \log_2(m/3)$, and $m$ is the number of the auxiliary quantum bits.

The matched first phase refers to a phase corresponding to the bit string in the objective function. The classical computer performs circuit construction with an objective of all phases $\alpha_s$ corresponding to generating of $2^n$ quantum bit stringss. Therefore, for each bit string in the objective function, there will be the corresponding phase $\alpha_s$. The phase $\alpha_s$ corresponding to each quantum bit string s may be calculated according to $\Sigma_s\langle s, x\rangle \alpha_s = \theta(x)$. When x may be taken from a non-zero quantum bit string, there will be a corresponding equation for each quantum bit string $x$. By concatenating all the equations, the phase $\alpha_s$ corresponding to each quantum bit string s may be obtained. In a specific application, the objective function may be $f_{1,k}(x) = (s(1, k), x)$, and the bit string in the objective function refers to $s(1, k)$, where $k \in [2^p]$,

Specifically, the classical computer determines the matched objective function needing to be implemented on each quantum bit of the target register, and then obtains the third controlled-NOT gate circuit by copying the suffix-part quantum bit in the copy register and implementing the matched objective function on each quantum bit of the target register; then determines the first phase matching each quantum bit of the target register respectively based on the phase corresponding to the bit string in the objective function matching each quantum bit; obtains the first phase rotation circuit by implementing phase rotation of the matched first phase on each quantum bit of the target register; and obtains the Gray initialization stage circuit by combining the third controlled-NOT gate circuit and the first phase rotation circuit.

In a specific application, the classical computer determines a target quantum bit acting on each quantum bit of the target register respectively after determining the matched objective function to be implemented on each quantum bit of the target register. The target quantum bit may be at least one quantum bit in the suffix-part quantum bit, or may be null. Furthermore, based on an interaction relation between the target quantum bit and each quantum bit in the target register, the copied suffix-part quantum bit may be selected from the copy register and acted on each quantum bit of the target register, so as to implement the matched objective function on each quantum bit of the target register. If the target quantum bit acting on the quantum bit of the target register is null, it means that there is no need to select the copied suffix-part quantum bit from the copy register to be acted on the quantum bit.

For example, it is assumed that the matched objective function to be implemented on one of the quantum bits in the target register is $f_{1,k}(x) = \langle s(1, k), x\rangle = \langle 0000, x\rangle = \langle 0000, x1x2x3x4\rangle$, where $s(1, k)=0000$, $x = x1x2x3x4$, the classical computer may be known from an inner product result ($0 * x1 + 0 * x2 + 0 * x3 + 0 * x4 = 0$) that the target quantum bit acting on the quantum bit is null, so there is no need to select the quantum bit from the copy register to act on the quantum bit in the target register.

For another example, it is assumed that the matched objective function to be implemented on one of the quantum bits in the target register is $f_{1,k}(x) = \langle s(1, k), x\rangle = \langle 0010, x\rangle = \langle 0010, x1x2x3x4\rangle$, where $s(1, k)=0010$, $x = x1x2x3x4$, the classical computer may be known from the inner product result ($0 * x1 + 0 * x2 + 1 * x3 + 0 * x4 = x3$) that the target quantum bit acting on the quantum bit is $x3$, so one $x3$ may be selected from the copy register to act on the quantum bit in the target register. Where, since $x1x2x3x4$ is a 4-quantum bit, its suffix-part quantum bit may be $x3x4$. If the suffix stage copy condition is that the quantity of the suffix-part quantum bits to be copied is 2, then there may be $x3x4x3x4$ in the copy register.

In a specific application, the phase rotation of the matched first phase on each quantum bit of the target register may be achieved through a rotating gate, that is, the rotating gate $R_{1,k} \overset{\text{def}}{=} R(\alpha_{s(1,k)})$ acts on the $k$ quantum bit of the target register. That is to say, if $\langle s(1, k), x\rangle = 1$, then the phase of the $k$ quantum bit on the target register rotates by $\alpha_{s(1,k)}$, otherwise the phase remains unchanged, where $\alpha_{s(1,k)}$ refers to the phase corresponding to the bit string $s(1, k)$.

In this embodiment, when the matched objective function is implemented on each quantum bit of the target register through the suffix-part quantum bit in the copy register, the circuit during acting may be implemented in parallel due to the fact that the suffix-part quantum bit in the copy register may act on different quantum bits of the target register, so that the third controlled-NOT gate circuit with the compressed circuit depth may be obtained. When the phase rotation of the matched first phase is implemented on each quantum bit of the target register, since all phase rotations do not act on the same quantum bit, all the phase rotations may be placed in the same layer of the circuit to achieve compression of the circuit depth.

In an embodiment, the determining the first phase matching each quantum bit of the target register respectively based on the objective function matching each quantum bit includes:

determine a quantum bit string corresponding to each quantum bit of the target register respectively based on the objective function matching each quantum bit;

determine a phase corresponding to the quantum bit string; and

take the phase corresponding to the quantum bit string as the first phase matching the quantum bit corresponding to the quantum bit string.

The quantum bit string refers to the bit string in the objective function that performs the inner product with the input register. For example, when the objective function is $f_{1,k}(x) = (s(1, k), x)$, the quantum bit string refers to $s(1, k)$ performing the inner product with the input register $x$. $s(1, k)$ represents that the quantum bit string is the $k$ bit string of the first row of bit strings in the two-dimensional array $\{s(j, k): j \in [2^{n-p}], k \in [2^p]\}$, and the two-dimensional array is obtained by dividing the pre-constructed quantum bit string set.

Specifically, because the objective function matching each quantum bit is the inner product of the bit string and the input register, the classical computer may determine the quantum bit string corresponding to each quantum bit of the target register respectively based on the objective function matching each quantum bit, so that the phase corresponding to the quantum bit string may be determined based on the calculated phase $\alpha_s$ corresponding to each quantum bit string $s$, and the phase corresponding to the quantum bit string is taken as the first phase matching the quantum bit corresponding to the quantum bit string.

In this embodiment, the quantum bit string corresponding to the quantum bit can be determined based on the objective function, so that the first phase matching the quantum bit may be determined based on the quantum bit string, so as to achieve the corresponding phase rotation based on the first phase.

In an embodiment, the copying the prefix-part quantum bit in the input register according to the quantum bit copy mode to copy the prefix-part quantum bit into the copy register, so as to obtain the prefix copy stage circuit includes:

perform restoration processing on a quantum bit undergoing a suffix processing stage in the copy register;

perform column copying on the prefix-part quantum bit in the input register according to the quantum bit copy mode to copy the prefix-part quantum bit onto different quantum bits in the copy register, so as to obtain a fourth controlled-NOT gate circuit;

perform iterative copying on the prefix-part quantum bit that has been copied onto the different quantum bits in the copy register in a row direction until the quantity of the prefix-part quantum bit in the copy register meets a suffix copy stage condition, so as to obtain a fifth controlled-NOT gate circuit; and

obtain the prefix copy stage circuit based on the fourth controlled-NOT gate circuit and the fifth controlled-NOT gate circuit.

Restoration processing refers to the restoration of the quantum state obtained at the suffix copy stage to the state before the suffix copy stage.

Specifically, the prefix copy stage is used for copying the prefix-part quantum bit in the input register into the copy register under the grid restriction condition. At this time, due to the fact that the copy register contains the quantum bit undergoing the suffix processing stage, the classical computer needs to first restore the quantum bit in the copy register undergoing the suffix processing stage, so as to restore the copy register to a state before the suffix copy stage; then performs one-time column copying on the prefix-part quantum bit in the input register according to the quantum bit copy mode to copy the prefix-part quantum bit onto the different quantum bits of the single column in the copy register respectively, so as to obtain the fourth controlled-NOT gate circuit; then performs iterative copying on the prefix-part quantum bit that has been copied onto the different quantum bits of the single column in the copy register in the row direction until the quantity of the prefix-part quantum bits in the copy register meets the prefix copy stage condition, so as to obtain the fifth controlled-NOT gate circuit; and obtains the prefix copy stage circuit by combining the fourth controlled-NOT gate circuit and the fifth controlled-NOT gate circuit.

In a specific application, when performing iterative copying on the prefix-part quantum bit that has been copied onto the different quantum bits of the single column in the copy register in the row direction, the classical computer determines the number of rows to be copied in the row direction according to the quantity of the prefix-part quantum bits that need to be copied on the copy register in the prefix copy stage condition, and the number of rows to be copied is the quantity of the prefix-part quantum bits to be copied on the copy register in the prefix copy stage condition minus 1.

In this embodiment, by performing column copying first on the prefix-part quantum bit and then performing iterative copying in the row direction according to the quantum bit copy mode, the circuit depth of the prefix copy stage circuit can be reduced under the grid restriction condition, and the circuit depth of the quantum state preparation circuit is effectively compressed, thereby minimizing the impact of de-coherence.

In an embodiment, the obtaining the Gray path stage circuit by performing Gray path processing on the prefix-part quantum bit in the copy register and the target register includes:

obtain, at each processing stage of Gray path processing, a processing circuit of a current processing stage by implementing objective function transformation matching the current processing stage on each quantum bit of the target register though the prefix-part quantum bit in the copy register; and

obtain the Gray path stage circuit based on the processing circuit of each processing stage in Gray path processing.

The Gray path processing stage includes $2^{n-p} - 1$ processing stages, where $n$ is the number of the input quantum bits, $p = \log_2(m/3)$, and $m$ is the number of the auxiliary quantum bits. The objective function transformation matching the current processing stage refers to the transformation of the objective function obtained in the previous processing stage to implement a new objective function. For example, the objective function transformation may specifically be the implementation of the linear function constituted based on the prefix-part quantum bit. For the first processing stage, the previous processing stage refers to the Gray initialization stage. That is, at the first processing stage of the Gray path processing stage, it is mainly to transform the objective function implemented by performing Gray initialization processing. In specific applications, for the two-dimensional array divided by the pre-constructed quantum bit string set, the objective function transformation of each processing stage is to respectively implement the inner product of bit strings of different rows and the input register. For example, the objective function transformation implemented at the first processing stage is $f_{2,k}(x) = \langle s(2, k), x \rangle$, where $s(2, k)$ is the second row of bit strings in the two-dimensional array, and $x$ is the input register.

Specifically, at each processing stage of Gray path processing, the classical computer transforms the objective function obtained at the previous processing stage through the prefix-part quantum bit in the copy register, obtains the processing circuit of the current processing stage by implementing objective function transformation matching the current processing stage on each quantum bit of the target register, and obtains the Gray path stage circuit by combining the processing circuit of each processing stage in Gray path processing.

In this embodiment, by implementing objective function transformation matching the current processing stage on each quantum bit of the target register though the prefix-part quantum bit in the copy register, the processing circuit of the current processing stage can be obtained, and then the Gray path stage circuit may be obtained based on the processing circuit of each processing stage in Gray path processing.

In an embodiment, the obtaining, at each processing stage of Gray path processing, the processing circuit of the current processing stage by implementing objective function transformation matching the current processing stage on each quantum bit of the target register though the prefix-part quantum bit in the copy register includes:

determine a quantum bit control bit acting on each quantum bit of the target register and a second phase matching each quantum bit respectively based on objective function transformation matching the current processing stage;

obtain an objective function transformation circuit by implementing objective function transformation control through the prefix-part quantum bit in the copy register according to the quantum bit control bit;

obtain a second phase rotation circuit by implementing phase rotation of the matched second phase on each quantum bit of the target register; and

obtain the processing circuit of the current processing stage according to the objective function transformation circuit and the second phase rotation circuit.

The matched objective function transformation refers to the transformation of the objective function of the previous processing stage implemented based on the prefix-part quantum bit. The quantum bit control bit refers to a quantum bit that controls changes in the quantum bit. For example, the quantum bit control bit may specifically refer to the quantum bit in the input register that controls changes in the quantum bit. The control of changes in the quantum bit may be achieved through the controlled-NOT gate. The quantum bit control bit is a control bit in the controlled-NOT gate, and the quantum bit that needs to be changed is a target bit.

The matched second phase refers to a phase corresponding to the bit string in the transformed objective function of the current processing stage. The classical computer performs circuit construction with an objective of all phases $\alpha_s$ corresponding to generating of $2^n$ quantum bit strings $s$. Therefore, for each bit string in the transformed objective function, there will be the corresponding phase $\alpha_s$. The phase $\alpha_s$ corresponding to each quantum bit string $s$ may be calculated according to $\Sigma_s \langle s, x \rangle \alpha_s = \theta(x)$. When $x$ may be taken from the non-zero quantum bit string, there will be the corresponding equation for each quantum bit string $x$. By concatenating all the equations, the phase $\alpha_s$ corresponding to each quantum bit string s may be obtained. In a specific application, the transformed objective function may be $f_{2,k}(x) = \langle s(2, k), x \rangle$, and the bit string in the transformed objective function refers to $s(2, k)$, where $k \in [2^p]$,

Specifically, the classical computer determines the matched objective function transformation to be implemented on each quantum bit of the current processing stage; determines the quantum bit control bit acting on each quantum bit of the target register and the second phase matching each quantum bit respectively based on objective function transformation matching the current processing stage, the quantum bit control bit being at least one quantum bit in the prefix-part quantum bit; and then may select, based on an interaction relation between the quantum bit control bit and each quantum bit in the target register, the copied prefix-part quantum bit from the copy register to act on each quantum bit of the target register, so as to obtain the objective function transformation circuit by implementing the objective function transformation on each quantum bit of the target register through the prefix-part quantum bit in the copy register.

After determining the objective function transformation matching the current processing stage, the classical computer may determine the second phase matching each quantum bit based on the phase corresponding to the bit string in the transformed objective function matching the current processing stage. In specific applications, because the transformed objective function is the inner product of the bit string and the input register, the classical computer may determine the quantum bit string corresponding to each quantum bit of the target register at the current processing stage respectively based on the transformed objective function, so that the phase corresponding to the quantum bit string may be determined based on the calculated phase $\alpha_s$ corresponding to each quantum bit string $s$, and the phase corresponding to the quantum bit string is taken as the second phase matching the quantum bit corresponding to the quantum bit string.

For example, it is assumed that the objective function transformation to be implemented on one of the quantum bits in the target register is to transform from $f_{1,k}(x) = \langle s(1, k), x \rangle = \langle 0000, x \rangle = \langle 0000, x1x2x3x4 \rangle$ to $f_{2k}(x) = \langle s(2, k), x \rangle = \langle 1000, x \rangle = \langle 1000, x1x2x3x4 \rangle$, the classical computer may be known from the inner product result ($0 * x1 + 0 * x2 + 0 * x3 + 0 * x4 = 0, 1 * x1 + 0 * x2 + 0 * x3 + 0 * x4 = x1$) that the quantum bit control bit acting on the quantum bit is $x1$, so one $x1$ may be selected from the copy register to act on the quantum bit in the target register. Where, since $x1x2x3x4$ is a 4-quantum bit, its prefix-part quantum bit may be $x1x2$. If the suffix stage copy condition is that the quantity of the suffix-part quantum bits to be copied is 2, then there may be $x1x2x1x2$ in the copy register.

Specifically, after obtaining the objective function transformation circuit, the classical computer obtains the second phase rotation circuit by implementing phase rotation of the matched second phase on each quantum bit of the target register, and obtains the processing circuit of the current processing stage according to the objective function transformation circuit and the second phase rotation circuit. In a specific application, the phase rotation of the matched second phase on each quantum bit of the target register may be achieved through the rotating gate, that is, the rotating gate $R_{j,k} \stackrel{\text{def}}{=} R(\alpha_{s(j,k)})$ acts on the $k$ quantum bit of the target register. That is to say, if $\langle s(j, k), x \rangle = 1$, then the phase of the $k$ quantum bit on the target register rotates by $\alpha_{s(j,k)}$, otherwise the phase remains unchanged, where $\alpha_{s(j,k)}$ refers to the phase corresponding to the bit string $s(j, k)$, and $j$ is used for representing the current processing stage. Gray path processing includes $2^{n-p} - 1$ processing stages, where $n$ is the number of the input quantum bits, $p = \log_2(m/3)$, $m$ is the number of the auxiliary quantum bits, $j = 2,3,..., 2^{n-p}$ is used for representing each processing stage respectively, and here, the Gray initialization stage may be regarded as the processing stage of $j = 1$.

In this embodiment, the quantum bit control bit acting on each quantum bit of the target register and the second phase matching each quantum bit may be determined respectively based on the objective function transformation matching the current processing stage. When the objective function transformation control is implemented through the prefix-part quantum bit in the copy register according to the quantum bit control bit, the circuit during acting may be implemented in parallel due to the fact that the prefix-part quantum bit in the copy register may act on the different quantum bits of the target register, so that the objective function transformation circuit with the compressed circuit depth may be obtained. When the phase rotation of the matched first phase is implemented on each quantum bit of the target register, since all phase rotations do not act on the same quantum bit, all the phase rotations may be placed in the same layer of the circuit to achieve compression of the circuit depth.

In an embodiment, the method for generating the quantum state preparation circuit further includes: configure an auxiliary register for the quantum state preparation circuit based on the number of the auxiliary quantum bits.

The copying the prefix-part quantum bit in the input register according to the quantum bit copy mode to copy the prefix-part quantum bit into the copy register, so as to obtain the prefix copy stage circuit includes:

copy the prefix-part quantum bit in the input register according to the quantum bit copy mode to copy the prefix-part quantum bit into the copy register and copy the prefix-part quantum bit into the auxiliary register, so as to obtain the prefix copy stage circuit.

The obtaining the Gray path stage circuit by performing Gray path processing on the prefix-part quantum bit in the copy register and the target register includes:

obtain the Gray path stage circuit by performing Gray path processing on the prefix-part quantum bit in the copy register, the prefix-part quantum bit in the auxiliary register and the target register.

The auxiliary register refers to a set of quantum bits that store auxiliary data. In this embodiment, the auxiliary data mainly refers to the prefix-part quantum bit. The auxiliary register is used for assisting in quantum state preparation, so as to further compress the circuit depth.

Specifically, the classical computer configures the copy register and the target register for the quantum state preparation circuit according to the number of the auxiliary quantum bits, and further configures the auxiliary register. In a specific application, when the number of the auxiliary quantum bits is m, the number of the quantum bits in the copy register is m/3, and the number of the quantum bits in the target register is m/3. The remaining m/3 quantum bits in the auxiliary quantum bits are divided into the auxiliary register. When copying the prefix-part quantum bit in the input register, the classical computer performs restoration processing on the quantum bit in the copy register undergoing the suffix processing stage; performs column copying on the prefix-part quantum bit in the input register according to the quantum bit copy mode to copy the suffix-part quantum bit onto the different quantum bits in the copy register respectively, so as to obtain the fourth controlled-NOT gate circuit; and then performs iterative copying on the prefix-part quantum bit that has been copied onto the different quantum bits in the copy register in the row direction until the quantity of the prefix-part quantum bits in the copy register meets the prefix copy stage condition, so as to obtain the fifth controlled-NOT gate circuit.

At the same time, the classical computer obtains a sixth controlled-NOT gate circuit by copying the prefix-part quantum bit into the auxiliary register according to the quantum bit copy mode, and then may obtain the prefix copy stage circuit by combining the fourth controlled-NOT gate circuit, the fifth controlled-NOT gate circuit, and the sixth controlled-NOT gate circuit.

In specific applications, when copying the prefix-part quantum bit into the auxiliary register according to the quantum bit copy mode, the classical computer first performs one-time column copying on the prefix-part quantum bit in the input register to copy the prefix-part quantum bit onto different quantum bits of the single column in the auxiliary register respectively; and then performs iterative copying on the prefix-part quantum bit that has been copied onto the different quantum bits of the single column in the auxiliary register in the row direction until the quantity of the prefix-part quantum bit in the auxiliary register meets the prefix copy stage condition, so as to obtain the sixth controlled-NOT gate circuit. In a specific application, when performing iterative copying on the prefix-part quantum bit that has been copied onto the different quantum bits of the single column in the auxiliary register in the row direction, the classical computer determines the number of rows to be copied in the row direction according to the quantity of the prefix-part quantum bits that need to be copied on the auxiliary register in the prefix copy stage condition, and the number of rows to be copied is the quantity of the prefix-part quantum bits to be copied on the auxiliary register in the prefix copy stage condition minus 1.

Specifically, at each processing stage of Gray path processing, the classical computer obtains the processing circuit of the current processing stage by implementing objective function transformation matching the current processing stage on each quantum bit of the target register though the prefix-part quantum bit in the copy register and the prefix-part quantum bit in the auxiliary register; and obtains the Gray path stage circuit based on the processing circuit of each processing stage in Gray path processing. In specific applications, when implementing the objective function transformation matching the current processing stage on each quantum bit of the target register through the prefix-part quantum bit in the copy register and the prefix-part quantum bit in the auxiliary register, the classical computer determines the quantum bit control bit acting on each quantum bit of the target register and the second phase matching each quantum bit respectively based on the objective function transformation matching the current processing stage; obtains the objective function transformation circuit by implementing objective function transformation control through the prefix-part quantum bit in the copy register and the prefix-part quantum bit in the auxiliary register according to the quantum bit control bit; and obtains the second phase rotation circuit by implementing the phase rotation of the matched second phase on each quantum bit of the target register; and obtains the processing circuit of the current processing stage according to the objective function transformation circuit and the second phase rotation circuit.

In a specific application, the quantum bit control bit is at least one quantum bit in the prefix-part quantum bit, and the classical computer may select, based on the interaction relation between the quantum bit control bit and each quantum bit in the target register, the copied prefix-part quantum bit from the copy register or the auxiliary register to act on each quantum bit of the target register, so as to obtain the objective function transformation circuit by implementing the objective function transformation on each quantum bit of the target register through the prefix-part quantum bit in the copy register and the quantum bit in the auxiliary register.

In this embodiment, Gray path processing is performed by introducing the auxiliary register, and the auxiliary register can be used to assist in the copy register, which can effectively compress the circuit depth of the Gray path stage circuit.

In an embodiment, a quantum state preparation method is provided. A description is provided by using an example in which the method is applied to a quantum computer 104 in FIG. 1, and the method includes the following steps: obtain quantum state data by performing quantum state preparation on circuit initial state data based on a quantum state preparation circuit, the quantum state preparation circuit being implemented through the method for generating the quantum state preparation circuit above.

The circuit initial state data refers to initial data of data required by quantum state preparation. For example, the circuit initial state data may be $|0\rangle^{\otimes n}$, where $n$ is the number of the input quantum bits. For another example, the circuit initial state data may be any group of computing bases of a quantum system.

Specifically, the classical computer sends a quantum program composed of the quantum state preparation circuit to the quantum computer. By executing the quantum program, the quantum computer may obtain the quantum state data by perform quantum state preparation on the circuit initial state data based on the quantum state preparation circuit.

The above quantum state preparation method obtains the quantum state data by performing quantum state preparation on the circuit initial state data through a quantum state preparation circuit with an effectively compressed circuit depth, thereby minimizing the impact of de-coherence.

The present disclosure further provides an application scenario. The method for generating the quantum state preparation circuit involved in the above embodiment may be used for the implementation of a quantum circuit of any n-quantum bit. The design of the quantum circuit of any n-quantum bit is illustrated below, that is, the above method for generating the quantum state preparation circuit is illustrated. Firstly, symbols used in this application scenario are defined. The main symbols used in this application scenario are shown in Table 1.

Table 1

| Symbol | Definition | Remark |
|---|---|---|
| $[n]$ | $\{1, 2, \dots, n\}$ | - |
| $x \oplus y$ | $(x_1 \oplus y_1, \dots, x_n \oplus y_n)^T$ | $x = (x_1, \dots, x_n)^T, y = (y_1, \dots, y_n)^T \in \{0,1\}^n$, Addition and multiplication are operations in a binary field. |
| $\langle x, y \rangle$ | $\bigoplus_{i=1}^{n} x_i y_i$ | $x = (x_1, \dots, x_n)^T, y = (y_1, \dots, y_n)^T \in \{0,1\}^n$, Addition and multiplication are operations in the binary field. |
| $\|\psi\rangle_k, \|\psi\rangle_S$ | A quantum state $\|\psi\rangle$ is a quantum state on a quantum bit $k$ (quantum bit set $S$). | - |
| $diag(U_1, U_2, \dots, U_k)$ $\in \mathbb{C}^{kj \times kj}$ | $\begin{bmatrix} U_1 & & & \\ & U_2 & & \\ & & \ddots & \\ & & & U_k \end{bmatrix}$ | $U_1, U_2, \dots, U_k \in \mathbb{C}^{j \times j}$ |
| $R(\theta)$ | $\begin{bmatrix} 1 & \\ & e^{i\theta} \end{bmatrix}$ | $\theta \in \mathbb{R}$ |
| $H$ | $\frac{1}{\sqrt{2}} \begin{bmatrix} 1 & 1 \\ 1 & -1 \end{bmatrix}$ | - |
| $S$ | $\begin{bmatrix} 1 & \\ & i \end{bmatrix}$ | - |
| CNOT | $\begin{bmatrix} 1 & & & \\ & 1 & & \\ & & & 1 \\ & & 1 & \end{bmatrix}$. | Use $CNOT_j^i$ to represent a CNOT gate with a control bit label being $i$ and a target bit label being $j$. |

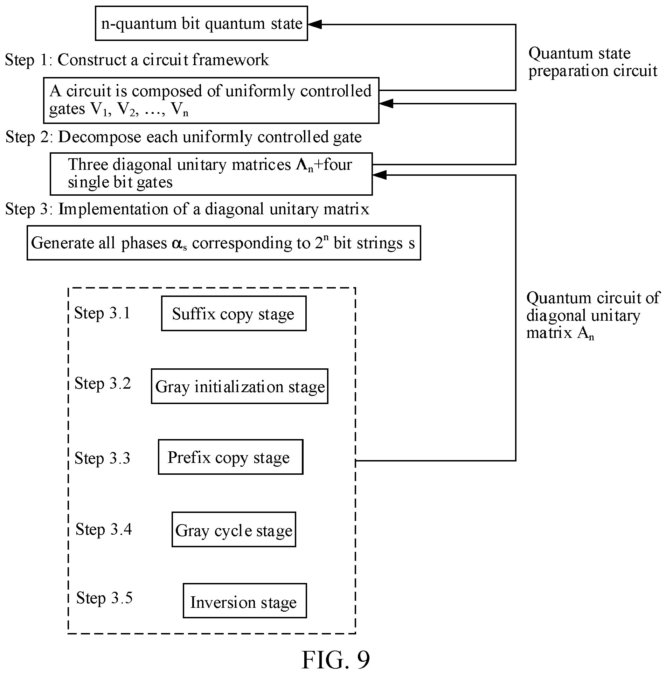

Specifically, as shown in FIG. 9, in this application scenario, the quantum state preparation circuit design may be divided into the following three steps. Step 1: Construct a circuit framework to decompose the quantum state preparation circuit into a series of uniformly controlled gates $V_1$, $V_2$, ..., $V_n$. Step 2: Decompose each uniformly controlled gate in the quantum state preparation circuit into three diagonal unitary matrices and four single bit quantum gates. Step 3: Implement a diagonal unitary matrix quantum circuit with an auxiliary quantum bit under a grid restriction condition. Step 3 may specifically be implemented by generating all phases $\alpha_s$ corresponding to $2^n$ quantum bit stringss, including: Step 3.1: A suffix copy stage; Step 3.2: A Gray initialization stage; Step 3.3: A prefix copy stage; Step 3.4: A Gray cycle stage; and Step 3.5: An inversion stage. It may be known that as long as the diagonal unitary matrix quantum circuit with the auxiliary quantum bit can be implemented under the grid restriction condition, the diagonal unitary matrix quantum circuit and the single bit quantum gate may be combined to obtain a uniformly controlled gate circuit, and the quantum state preparation circuit may be generated by combining the uniformly controlled gate circuits. Each step is illustrated below separately.

Step 1: Construct the circuit framework to decompose the quantum state preparation circuit into a series of uniformly controlled gates $V_1$, $V_2$, ..., $V_n$.

Firstly, the uniformly controlled gates are defined, and a n- quantum bit uniformly controlled gate $V_n$ is defined as:

$$V_n = diag(U_1, U_2, ..., U_{2^{n-1}}) \in \mathbb{C}^{2^n \times 2^n},$$

Where, for any $k \in [2^{n-1}]$, $U_k \in \mathbb{C}^{2 \times 2}$ is a unitary matrix. The quantum circuit of any $n$-quantum bit may be decomposed into a combination of $n$ uniformly controlled gates of different scales, namely, $\prod_{k=1}^{n}(V_k \otimes \mathbb{I}_{n-k})$, where $\mathbb{I}_{n-k}$ represents a unit operator of the $n$ - $k$ quantum bit. Based on a circuit decomposition principle, the uniformly controlled gate may be decomposed into a diagonal unitary matrix and the single bit quantum gate when a global phase is ignored, that is, the uniformly controlled gate circuit includes the diagonal unitary matrix quantum circuit and the single bit quantum gate. In this application scenario, the uniformly controlled gate is decomposed into the combination of three diagonal unitary matrices and four single bit quantum gates.

Step 2: Decompose each uniformly controlled gate in the quantum state preparation circuit into three diagonal unitary matrices and four single bit quantum gates.

Firstly, $n$-quantum bit diagonal unitary matrix is defined: $\Lambda_n = diag\left(1, e^{i\theta_1}, ..., e^{i\theta_{2^n-1}}\right) \in \mathbb{C}^{2^n \times 2^n}$. From the circuit decomposition principle, it may be known that the uniformly controlled gate may be decomposed into the following form when a global phase is ignored: $V_n = \Lambda_n^1(\mathbb{I}_{n-1} \otimes (SH))\Lambda_n^2(\mathbb{I}_{n-1} \otimes (SH))\Lambda_n^3$, where $\Lambda_n^1, \Lambda_n^2, \Lambda_n^3$ is the $n$ -quantum bit diagonal unitary matrix. That is, each uniformly controlled gate in the quantum state preparation circuit may be decomposed into three diagonal unitary matrices and four single bit quantum gates.

Step 3: Implement the diagonal unitary matrix quantum circuit with the auxiliary quantum bit under the grid restriction condition.

After step 1 and step 2, the quantum state preparation circuit has been decomposed into a series of diagonal unitary matrices and some single bit quantum gates. Therefore, the quantum state preparation circuit may be obtained by only implementing a quantum circuit with any diagonal unitary matrix. Thus, in step 3, under the grid restriction condition, this application scenario utilizes auxiliary quantum bits to achieve parallelism of the diagonal unitary matrix quantum circuit, thereby achieving the goal of reducing a circuit depth.

A role of the diagonal unitary matrix quantum circuit is to implement the following transformations on each vector $|x\rangle$ of a set of computing bases of the quantum system: $|x\rangle \rightarrow e^{i\theta(x)}|x\rangle$, $\forall x \in \{0,1\}^n$ Based on this, parameters $\{\alpha_s: s \in \{0,1\}^n - \{0^n\}\}$ may be defined to meet: $\Sigma_s \langle s, x \rangle \alpha_s = \theta(x)$, $\forall x \in \{0,1\}^n - \{0^n\}$, where, $s$ and $x$ are quantum bit strings, $n$ is the number of the input quantum bits, $\alpha_s$ is the phase, and $\langle s, x \rangle$ represents an inner product of the quantum bit string $s$ and the quantum bit string $x$. Therefore, the diagonal unitary matrix quantum circuit may be implemented by generating all the phases $\alpha_s$ corresponding to $2^n$ quantum bit strings s. Each quantum bit strings in $2^n$ quantum bit strings shas a corresponding phase $\alpha_s$.

Firstly, three circuits under the grid restriction condition are introduced for construction, and the following three circuits are used for the implementation of step 3. First is circuit implementation of a controlled-NOT gate $CNOT_j^i$ under path restriction. Under path restriction, $CNOT_j^i$ may be implemented by the CNOT circuit with both depth and size being

$O(|i - j|)$(as shown in FIG. 8).Second is circuit implementation of $n$-quantum bit reversible linear transformation under path restriction.It is assumed that $U$ is reversible linear transformation of $n$ quantum bits.Under $n$path restriction, $U$ may be implemented by a $n$ quantum bit CNOT quantum circuit with a circuit depth of $O(n^2)$.The third is circuit implementation of copy transformation under grid restriction. Under the $n_1 \times n_2$ grid restriction, for any$x = x_1 x_2 \cdots x_n \in \{0,1\}^n$, copy

$$|x\rangle|0^{n_1 n_2 - n}\rangle \to |x\rangle \underbrace{|x\rangle \cdots |x\rangle}_{\frac{n_1 n_2}{n} - 1|x\rangle}.$$

transformation $\phantom{xxx}$, may be implemented by the CNOT circuit with a depth of $O(n^2 + n_1 + n_2)$.

The implementation of copy transformation under $n_1 \times n_2$ grid restriction is divided into two steps.

Step 1: Copy under first column restriction ($n_1$ - path restriction n), that is, implement the following transformation:

$$|x\rangle|0^{n_1 - n}\rangle \to |x\rangle \underbrace{|x\rangle \cdots |x\rangle}_{\frac{n_1}{n} - 1|x\rangle},$$

That is, $|x\rangle$ is copied to $|0^{n1-n}\rangle$ quantum bits, and copying of the above transformation may be achieved by a copy circuit under column restriction shown in FIG. 7. In the copy circuit under the column restriction, it may be known from the circuit implementation of the controlled-NOT gate under the path restriction that each controlled-NOT gate may be implemented by the CNOT circuit with a depth of $O(n)$ under the $(n + 1)$-path restriction. Therefore, under the $n_1$-path

restriction, the circuit depth of the above transformation is $O\left(n^2 + n \cdot (\frac{n_1}{n} - 1)\right) = O(n^2 + n_1)$.

Step 2: Under the restriction of a $n_2$-path$(i, 1)$ - $(i, 2)$ - $\cdots$ - $(i, n_2)$ ($i$ row of a grid), copy each quantum bit $(i, 1)$

for $n_2$ - 1 times. For any $i \in [n_1]$, this step may be implemented by a quantum circuit $\prod_{j=1}^{n_2-1} CNOT_{(i,j+1)}^{(i,j)}$ with a depth of $O(n_2)$. Because the above $n_1$ path restrictions do not intersect, they may be implemented in parallel.

Further, in order to better describe the quantum circuit construction of each step, some symbols are first introduced in this application scenario. $p = \log(m/3)$, $x = x_{pre}x_{suf} \in \{0,1\}^n$, $x_{pre} = x_1 x_2 \cdots x_{n-p}$ and $x_{suf} = x_{n-p+1} \cdots x_n$ are defined. Where, $m$is the number of auxiliary quantum bits, $x$ is the quantum bits in the input register, $x_{pre}$ is the prefix-part quantum bit in the input register, $x_{suf}$ is the suffix-part quantum bit in the input register, $n$ is the number of the input quantum bits, without loss of generality, $n_1 \geq n_2$. This application scenario introduces the circuit implementation of unitary transformation to be used later before designing the quantum state preparation circuit under the grid restriction. It is assumed without loss of generality that $n_2 \leq 2^{n/3}$ and $m \leq \sqrt{n_2} 2^{n/2}$. If $n_2$ is greater than $2^{n/3}$, this application scenario only uses a grid with a width of $2^{n/3}$. If $m > \sqrt{n_2} 2^{n/2}$, this application only uses an auxiliary quantum bit that does not exceed $\sqrt{n_2} 2^{n/2}$.The input quantum bit is called an input register, denoted as $I = \{\iota_1, \iota_2, \cdots, \iota_n\}$. The auxiliary quantum bit is divided into three registers: a copy register $C:C = \{c_1, c_2, \ldots, c_{m/3}\}$, a target register $T:T = \{t_1, t_2, \ldots, t_{m/3}\}$, and an auxiliary register $A: A = \{a_1, a_2, \ldots, a_{m/3}\}$.

In the $n_1 \times n_2$-grid, there is a path with a length of $n + m = n_1 \times n_2$. The arrangement of the quantum bits in these three registers under n + m-path restriction is as follows, where, $c_i$, $t_i$ and $a_i(i \in [1, m/3])$ are names of each quantum

bit in the n$_1 \times$ n$_2$-grid, and $R_i(i \in [1, \frac{m}{3(n-p)}])$ is a group name after grouping the named quantum bits:

$$R_1: c_1, t_1, c_2, t_2, \ldots, c_{n-p}, t_{n-p}, a_1, a_2, \ldots, a_{n-p}$$

$$R_2: c_{n-p+1}, t_{n-p+1}, c_{n-p+2}, t_{n-p+2}, \ldots, c_{2(n-p)}, t_{2(n-p)}, a_{n-p+1}, a_{n-p+2}, \ldots, a_{2(n-p)}$$

$$\vdots$$

$$R_k: c_{(k-1)(n-p)+1}, t_{(k-1)(n-p)+1}, c_{(k-1)(n-p)+2}, t_{(k-1)(n-p)+2}, \ldots,$$

$$c_{k(n-p)}, t_{k(n-p)}, a_{(k-1)(n-p)+1}, a_{(k-1)(n-p)+2}, \ldots, a_{k(n-p)}$$

$$\vdots$$

$$R_{\frac{m}{3(n-p)}}: c_{\left(\frac{m}{3(n-p)}-1\right)(n-p)+1}, t_{\left(\frac{m}{3(n-p)}-1\right)(n-p)+1}, \ldots,$$

$$c_{\frac{m}{3(n-p)}(n-p)}, t_{\frac{m}{3(n-p)}(n-p)}, a_{\left(\frac{m}{3(n-p)}-1\right)(n-p)+1}, \ldots, a_{\frac{m}{3(n-p)}(n-p)}$$

Below is illustration for each subdivision step included in step 3.

Step 3.1: The suffix copy stage.

At the suffix copy stage, it is necessary to copy the last $p$ quantum bits $x_{n-p+1}, x_{n-p+2}, \ldots, x_n$ in the input register by $\frac{m}{3p}$ into the copy register C under the grid restriction. That is to say, the diagonal unitary matrix $U_{copy,1}$ acting on the input register and the copy register under grid restriction is implemented:

$$|x\rangle_I |0^{m/3}\rangle_C = |x_{pre}\rangle_{\{i_1, \cdots, i_{n-p}\}} |x_{suf}\rangle_{\{i_{n-p+1}, \cdots, i_n\}} |0^{m/3}\rangle_C \xrightarrow{U_{copy,1}} |x\rangle_I |x_{SufCopy}\rangle_C,$$

Where:

$$|x_{SufCopy}\rangle = \overbrace{|x_{suf} x_{suf} \cdots x_{suf}\rangle}^{\frac{m}{3p} x_{suf}}$$

It may be known from the circuit implementation of copy transformation under the grid restriction that under the grid restriction, $U_{copy,1}$ may be implemented by the CNOT circuit with a depth of $O(p^2 + n_1 + n_2) = O(\log^2 m + n_1 + n_2)$.

Step 3.2: The Gray initialization stage.

At the Gray initialization stage, the circuit implementation is divided into two steps. The first step $U_1$ is to realize $m/3$ linear functions $f_{1,k}(x) = (s(1, k), x)$, where $s(1, k)$ is the $n$ bit string, and the subscript $j$ represents that the linear function is implemented in the $k$ bit of the target register. The second step is to achieve phase rotation in the target register. In order to clearly illustrate the linear function implemented in the first step, the following bit string set is constructed in this application scenario.

$p = \log(m/3)$ is made. A set $\{0,1\}^n$ may be divided into a two-dimensional array $\{s(j, k): j \in [2^{n-p}], k \in [2^p]\}$ composed of $n$ bit strings, and the two-dimensional array meets the following three conditions: the first is that the first $(n - p)$ bits of the bit string in the first row $\{s(1, k): k \in [2^p]\}$ of the array are all 0, and the bit string in each column $\{s(j, k): j \in [2^{n-p}]\}$ of the array have the same last $p$ bits. The second is that $\forall k \in [2^p], \forall j \in [2^{n-p} - 1]$, $s(j, k)$ and $s(j + 1, k)$ happen to have one different bit. The third is that prefix-part bits of $\forall k \in [2^p], \forall \ell \in \left[\frac{2^{n-p}}{n-p}\right]$, $s(1 + (\ell - 1)(n - p), k)$, $s(2 + (\ell - 1)(n - p), k), \ldots, s(\ell(n - p), k)$ are 1-Gray code, 2-Gray code,..., $n - p$ Gray code respectively.

The goal of the first step $U_1$ is to achieve a quantum state $|f_{1,k}(x)\rangle$ on each quantum bit $k$ of the target register after the end of this step, where $f_{1,k}(x) = (s(1, k), x)$. The second step is used for making a rotation gate

$R_{1,k} \stackrel{\text{def}}{=} R(\alpha_{s(1,k)})$ act on the $k$ quantum bit of the target register. That is to say, if $(s(1, k), x) = 1$, then the phase of the $k$ quantum bitrotates by $\alpha_{s(1,k)}$, otherwise the phase remains unchanged. $R_1 = R(\alpha_{s(1,k)})$ is defined.

The following explains the transformation implemented at the Gray initialization stage and the circuit depth that implements the transformation.

The Gray initialization stage is usually represented by $U_{GrayInit}$, which can complete the following operations:

$$|x\rangle_I |x_{SufCopy}\rangle_C |0^{m/3}\rangle_T \xrightarrow{U_{GrayInit}} e^{i \sum_{k \in [2^p]} f_{j,1}(x)\alpha_{s(1,k)}} |x\rangle_I |x_{SufCopy}\rangle_C |f_{1,[2^p]}\rangle_T$$

Where, $|f_{1,2p}\rangle = \otimes_{k \in [2p]} |f_{1,k}\rangle$. Under the path (grid) restriction, the Gray initialization stage may be implemented by a quantum circuit with a depth of $O(\log^2 m)$.

First, how to implement $p$ linear functions composed of suffix variables $x_{n-p+1}, x_{n-p+2}, \ldots, x_n$ in the first step $U_1$ is illustrated. After the first step $U_1$, the state of the $2^p$ quantum bits in the target register is converted to $\{a_1 x_{n-p+1} \oplus a_2 x_{n-p+2} \oplus \cdots \oplus a_p x_n : a_1, \ldots, a_p \in \{0,1\}\}$, that is, the $k$ quantum bit in the target register is converted to $|f_{1,k}(x)\rangle$ in the process. In the second step, a phase $f_{1,k}(x) \cdot \alpha_{s(1,k)}$ is added to a base $|x\rangle_I |x_{SufCopy}\rangle_C |0^{m/3}\rangle_T$. Therefore, it may be obtained that:

$$|x\rangle_I |x_{SufCopy}\rangle_C |0^{m/2}\rangle_T \xrightarrow{U_1} |x\rangle |x_{SufCopy}\rangle_C |f_{1,[2^p]}\rangle_T$$
$$\xrightarrow{R_1} e^{i \sum_{j \in [\ell]} f_{j,1}(x)\alpha_{s(j,1)}} |x\rangle |x_{SufCopy}\rangle_C |f_{1,[2^p]}\rangle_T$$

After step 3.1, the quantum bits in the copy register $C$ and the target register T have the following form:

$$\bigotimes_{\ell=1}^{2^p/p} \left( |x_{n-p+1}\rangle_{c_{1+(\ell-1)p}} |0\rangle_{t_{1+(\ell-1)p}} |x_{n-p+2}\rangle_{c_{2+(\ell-1)p}} |0\rangle_{t_{2+(\ell-1)p}} \cdots |x_n\rangle_{c_{\ell p}} |0\rangle_{t_{\ell p}} \right)$$

Where, $c_{1+(\ell-1)p}, c_{2+(\ell-1)p}, \ldots c_{\ell p}$ respectively represent the quantum bits in the copy register $C$, and, $t_{1+(\ell-1)p}, t_{2+(\ell-1)p}, \ldots t_{\ell p}$ respectively represent the quantum bits in the target register T, that is, the suffix-part quantum bit has already been copied in the copy register, and there is still 0 in the target register.

Therefore, the transformation of $U_1$ may be written in the following form:

$$\bigotimes_{\ell=1}^{2^p/p} \left( |x_{n-p+1}\rangle_{c_{1+(\ell-1)p}} |0\rangle_{t_{1+(\ell-1)p}} |x_{n-p+2}\rangle_{c_{2+(\ell-1)p}} |0\rangle_{t_{2+(\ell-1)p}} \cdots |x_n\rangle_{c_{\ell p}} |0\rangle_{t_{\ell p}} \right) \xrightarrow{U_1}$$

$$\bigotimes_{\ell=1}^{2^p/p} \left( \begin{array}{c} |x_{n-p+1}\rangle_{c_{1+(\ell-1)p}} |f_{1,1+(\ell-1)p}(x)\rangle_{t_{1+(\ell-1)p}} |x_{n-p+2}\rangle_{c_{2+(\ell-1)p}} |f_{1,2+(\ell-1)p}(x)\rangle_{t_{2+(\ell-1)p}} \\ \cdots \\ |x_n\rangle_{c_{\ell p}} |f_{1,\ell p}(x)\rangle_{t_{\ell p}} \end{array} \right)$$

For each $\ell \in \left[\frac{2^p}{p}\right]$, transformation

$$\left(\left|x_{n-p+1}\right\rangle_{c_{1+(\ell-1)p}}\left|0\right\rangle_{t_{1+(\ell-1)p}}\left|x_{n-p+2}\right\rangle_{c_{2+(\ell-1)p}}\left|0\right\rangle_{t_{2+(\ell-1)p}} \cdots \left|x_{n}\right\rangle_{c_{\ell p}}\left|0\right\rangle_{t_{\ell p}}\right) \rightarrow$$

$$\left|x_{n-p+1}\right\rangle_{c_{1+(\ell-1)p}}\left|f_{1,1+(\ell-1)p}(x)\right\rangle_{t_{1+(\ell-1)p}}\left|x_{n-p+2}\right\rangle_{c_{2+(\ell-1)p}}\left|f_{1,2+(\ell-1)p}(x)\right\rangle_{t_{2+(\ell-1)p}}$$
$$\cdots$$
$$\left|x_{n}\right\rangle_{c_{\ell p}}\left|f_{1,\ell p}(x)\right\rangle_{t_{\ell p}}$$

is the reversible linear transformation of p-quantum bits, therefore, the above process may be implemented by the CNOT circuit with the $O(p^2)$ depth under the path (grid) restriction. Due to the disjoint circuit constraint diagrams of each transformation above, all transformations can be implemented in parallel. Thus, the transformation $U_1$ may be implemented by the CNOT circuit with the depth of $O(p^2)$ under the path (grid) restriction.

For an operator $R_1$, since all rotation gates do not act on the same quantum bit, they may be placed in the same layer of circuit, that is, the circuit depth is 1. In summary, the circuit depth at the Gray initialization stage does not exceed $O(p^2) = O(\log^2 m)$.

Step 3.3: The prefix copy stage.

At the prefix copy stage, the quantum state obtained at the suffix copy stage is first restored, and then $\dfrac{m}{3(n-p)}$ copies of the prefix variables $x_1, x_2, \ldots, x_{n-p}$ are implemented in the copy register and the auxiliary register respectively. The prefix copy stage is similar to the suffix copy stage, and its circuit construction is not repeated here.

The prefix copy stage is usually represented by $U_{copy,2}$, the variables $x_1, \ldots, x_{n-p}$ in the input register are copied by $\left\lceil \dfrac{m}{3(n-p)} \right\rceil$ to copy into the copy register and the auxiliary register, and thus a CNOT circuit with a depth of up to $O(n^2 + n_1 + n_2)$ needs to be implemented.

The effect achieved by $U_{copy,2}$ is:

$$|x\rangle_I \left|0^{m/3}\right\rangle_C \left|0^{m/3}\right\rangle_A$$
$$= \left|x_{pre}\right\rangle_{\{\iota_1,\cdots,\iota_{n-p}\}} \left|x_{suf}\right\rangle_{\{\iota_{n-p+1},\cdots,\iota_n\}} \left|0^{m/3}\right\rangle_C \left|0^{m/3}\right\rangle_A$$
$$\xrightarrow{U_{copy,2}} |x\rangle_I \left|x_{PreCopy}\right\rangle_C \left|x_{PreCopy}\right\rangle_A$$

Where, $\left|0^{m/3}\right\rangle_C$ represents the copy register, $\left|0^{m/3}\right\rangle_A$ represents the auxiliary register,

$$\left|x_{PreCopy}\right\rangle = \overbrace{\left|x_{pre}x_{pre}\cdots x_{pre}\right\rangle}^{\frac{m}{3(n-p)}x_{pre}}.$$

The operator for the prefix copy stage is $U_{copy,2}U_{copy,1}^{\dagger}$, the depth is up to $O(p^2 + n_1 + n_2) + 2 \cdot O((n-p)^2 + n_1 + n_2) = O(n^2 + n_1 + n_2)$, where $U_{copy,1}^{\dagger}$ represents the restoration of the quantum state obtained at the suffix copy stage. Therefore, the effect of the operator $U_{copy,2}U_{copy,1}^{\dagger}$ in this stage is:

$$|x\rangle_I \left|x_{SufCopy}\right\rangle_C \left|0^{m/3}\right\rangle_A \xrightarrow{U_{copy,1}^{\dagger}}$$

$$|x\rangle_I \left|0^{m/3}\right\rangle_C \left|0^{m/3}\right\rangle_A \xrightarrow{U_{copy,2}} |x\rangle_I \left|x_{PreCopy}\right\rangle_C \left|x_{PreCopy}\right\rangle_A.$$

Step 3.4: The Gray cycle stage (i.e. A Gray path processing stage).

The Gray cycle stage contains $2^{n-p} - 1$ processing stages, $j = 2,3, ..., 2^{n-p}$ serve as subscripts for these processing stages. The Gray initialization stage may be regarded as a processing stage of $j = 1$. At each processing stage $j$, the circuit $C$ implements the following two steps: the first step is implemented by a quantum circuit $U_j$ composed of CNOT gates, the CNOT gates are controlled by $x_{tjk}$, and the target bit is the k bit of the target register, where $t_{jk}$ represents the subscripts of different bits of $s(j, k)$ and $s(j + 1, k)$ in the two-dimensional array. The second step is to apply rotation $R(\alpha_{s(j,k)})$ on the k quantum bit of the target register. $R_j = \otimes_{k \in [2p]} R(\alpha_{s(j,k)})$ is made.

Therefore, in the Gray cycle stage, the $j^{th}$ stage actually achieves the following transformation:

$$|x\rangle_I |x_{PreCopy}\rangle_C |f_{j-1,[2^p]}\rangle_T |x_{PreCopy}\rangle_A \begin{array}{c} \xrightarrow{U_j} |x\rangle_I |x_{PreCopy}\rangle_C |f_{j,[2^p]}\rangle_T |x_{PreCopy}\rangle_A \\ \xrightarrow{R_j} e^{i\sum_{k \in [2^p]} f_{j,k}(x)\alpha_{s(j,k)}} |x\rangle_I |x_{PreCopy}\rangle_C |f_{j,[2^p]}\rangle_T |x_{PreCopy}\rangle_A \end{array}.$$

Where $f_{jk}(x) = \langle s(j,k),x\rangle$ and $|f_{j[2p]}\rangle = \otimes_{k \in [2p]} |f_{j,k}(x)\rangle$. The circuit depth at the Gray cycle stage is up to $O(2^{n-p})$.

The following is a proof of the construction of the circuit in the Gray cycle stage. The Gray cycle stage is to repeat the two steps implemented in each processing stage a total of $2^{n-p} - 1$ times.

For step 1 and for the convenience of description, $U_j$ transformation in the j stage of the Gray cycle is written as the following equivalent form:

$$|x\rangle_I \bigotimes_{\ell=1}^{\frac{m}{3(n-p)}} |x_1 f_{j,1+(\ell-1)(n-p)}(x) x_2 f_{j,2+(\ell-1)(n-p)}(x) \cdots x_{n-p} f_{j,\ell(n-p)} x_{pre}\rangle_{R_\ell}$$

$$\xrightarrow{U_j} |x\rangle_I \bigotimes_{\ell=1}^{\frac{m}{3(n-p)}} |x_1 f_{j+1,1+(\ell-1)(n-p)}(x) x_2 f_{j+1,2+(\ell-1)(n-p)}(x) \cdots x_{n-p} f_{j+1,\ell(n-p)} x_{pre}\rangle_{R_\ell}$$

On the register $R_1$, the following transformation is implemented:

$$|x_1 f_{j,1}(x) x_2 f_{j,2}(x) \cdots x_{n-p} f_{j,n-p} x_{pre}\rangle_{R_1}$$

$$\rightarrow |x_1 f_{j+1,1}(x) x_2 f_{j+1,2}(x) \cdots x_{n-p} f_{j+1,n-p} x_{pre}\rangle_{R_1},$$

Where, $f_{j,1}(x) = \langle s(j, 1), x\rangle$, $f_{j+1,1}(x) = \langle s(j + 1,1), x\rangle$, that is, on the register $R_1$, the transformation corresponding to the $j^{th}$ row of bit string to the $(j+1)^{th}$ row of bit string in the constructed two-dimensional array is implemented.

Without loss of generality, it is assumed that s(j, 1) and s(j + 1,1) are different at the $\gamma$ bit. It may be known from the properties of the Gray code cycle, $s(j, 1), \cdots, s(j, n - p)$ and $s(j + 1,1), \cdots, s(j + 1, n - p)$ are different at the $\gamma, \gamma + 1, \gamma + 2, \cdots, n - p, 1, 2, \cdots, \gamma - 1$ bit respectively.

If $\gamma = 1$, the transformation may be implemented by the following CNOT circuit:

$$\prod_{i=1}^{n-p} CNOT_{t_i}^{c_i},$$

The control bit and target bit of each CNOT gate in this circuit are adjacent, and the control bits and target bits of any two CNOT gates are different, so its circuit depth is 1. If $\gamma$ is strictly greater than 1, the transformation may be implemented by the following CNOT circuit:

$$\prod_{f=1}^{\gamma-1} CNOT_{t_{n-p-\gamma+1+f}}^{a_f} \prod_{h=1}^{n-p-\gamma+1} CNOT_{t_h}^{c_{h+\gamma-1}}$$

$$= \prod_{k=1}^{\gamma-1} \prod_{i=1}^{\left\lceil \frac{n-p+k}{\gamma-1} \right\rceil} CNOT_{t_{(i-1)\gamma-i+k+1}}^{c_{i(\gamma-1)+k}} CNOT_{t_{\left\lceil \frac{n-p+k}{\gamma-1} \right\rceil (\gamma-1)+k}}^{a_{\left\lceil \frac{n-p+k}{\gamma-1} \right\rceil (\gamma-1)+k-(n-p-\gamma+1)}} \stackrel{def}{=} \prod_{k=1}^{\gamma-1} C_k$$

Where, the above circuit represents that the quantum bits in the auxiliary register may be acted onto the target register, that is, $\gamma$ - 1 uses the quantum bits in the auxiliary register, and the remaining uses the quantum bits in the copy register. Therefore, in the above circuit, all the CNOT gates in $C_k$ are restricted by disjoint paths, and these CNOT gates may be implemented in parallel, that is, the auxiliary register may be used to further compress the circuit depth. A distance between the control bit and the target bit of the CNOT gate is $O(\gamma)$, so $C_k$ may be implemented by a circuit with a depth of $O(\gamma)$ under the grid (path) restriction. Therefore, under the grid restriction, $\prod_{k=1}^{\gamma-1} C_k$ may be implemented by the circuit with a depth of $O(\gamma) \cdot (\gamma - 1)$. The transformation on all the registers $R_\ell$ is the same as $R_1$, and the graph restrictions on these registers do not intersect, so the circuit depth of $U_j$ is $O(\gamma^2)$.

For step 2, it only includes the single bit quantum gate acting on the different quantum bits, so this step may be implemented in one layer circuit in parallel.

It is worth mentioning that it may be known from the properties of the Gray code that in the $2^{n-p}$ - 1 processing stage of the Gray cycle, the situation of $s(j, 1)$ and $s(j + 1,1)$ at the $\gamma$ bit will cause occurring of $2^{n-p-\gamma}$. Therefore, under the path (grid) restriction, the Gray cycle stage may be implemented by a circuit with a depth of

$$\sum_{\gamma=1}^{n-p} O(\gamma^2 2^{n-p-\gamma}) = O(2^{n-p})$$.

Step 3.5: The inversion stage.

The quantum circuit at the inversion stage is $U_{Inverse}$ =

$$U_{copy,1}^\dagger U_1^\dagger U_{copy,1}^\dagger U_{copy,2}^\dagger U_2^\dagger \cdots U_{2^{n-p}}^\dagger.$$

It implements the following transformation:

$$e^{\theta(x)}|x\rangle_I |x_{PreCopy}\rangle_C |f_{j,[2^p]}\rangle_T |x_{PreCopy}\rangle_A \xrightarrow{U_{Inverse}} e^{\theta(x)}|x\rangle_I |0^{m/3}\rangle_C |0^{m/3}\rangle_T |0^{m/3}\rangle_A$$

That is, restore the copy register, the target register, and the auxiliary register.

The inversion stage quantum circuit is an inversion circuit of all CNOT circuits in steps 3.1 to step 3.4, with a depth of $O(\log^2 m + n_1 + n_2) + O(n^2 + n_1 + n_2) + O(\log^2 m) +$

$$O(2^n/m) = O\left(\log^2 m + n_1 + n_2 + \frac{2^n}{m}\right) = O\left(2^{n/3} + \frac{2^{n/2}}{\sqrt{\min\{n_1,n_2\}}} + \frac{2^n}{m+n}\right).$$

The diagonal unitary matrix quantum circuit corresponding to step 3 (diagonal unitary matrix $\Lambda_n$) may be obtained by combining the above five steps.

The quantum circuit depths of the five stages above are added to obtain all the circuit depths of

$$O\left(\log^2 m + n_1 + n_2 + \frac{2^n}{m}\right) = O\left(2^{n/3} + \frac{2^{\frac{n}{2}}}{\sqrt{n_2}} + \frac{2^n}{m}\right).$$

The process of implementing the diagonal unitary matrix $\Lambda_n$ in the five stages of step 3 above may be represented by the following formula:

$$|x\rangle_I |0^{m/3}\rangle_C |0^{m/3}\rangle_T |0^{m/3}\rangle_A$$

$$\xrightarrow{U_{copy,1}} |x\rangle_I |x_{SufCopy}\rangle_C |0^{m/3}\rangle_T |0^{m/3}\rangle_A$$

$$\xrightarrow{U_{GrayInit}} e^{i\sum_{k\in[2^p]} f_{1,k}(x)\alpha_{s(1,k)}} |x\rangle_I |x_{SufCopy}\rangle_C |f_{1,[2^p]}\rangle_T |0^{m/3}\rangle_A$$

$$\xrightarrow{U_{copy,2}U_{copy,1}^\dagger} e^{i\sum_{k\in[2^p]} f_{1,k}(x)\alpha_{s(1,k)}} |x\rangle_I |x_{PreCopy}\rangle_C |f_{1,[2^p]}\rangle_T |x_{PreCopy}\rangle_A$$

$$\xrightarrow{R_2 U_2} e^{i\sum_{k\in[2^p]} (f_{1,k}(x)\alpha_{s(1,k)}+f_{2,k}(x)\alpha_{s(2,k)})} |x\rangle_I |x_{PreCopy}\rangle_C |f_{2,[2^p]}\rangle_T |x_{PreCopy}\rangle_A$$

$$\vdots$$

$$\xrightarrow{R_{2^{n-p}}U_{2^{n-p}}} e^{i\sum_{j\in[2^{n-p}],k\in[2^p]} f_{j,k}(x)\alpha_{s(j,k)}} |x\rangle_I |x_{PreCopy}\rangle_C |f_{2^{n-p},[2^p]}\rangle_T |x_{PreCopy}\rangle_A$$

$$= e^{i\sum_{s\in\{0,1\}^n-\{0^n\}}\langle s,x\rangle\alpha_s} |x\rangle_I |x_{PreCopy}\rangle_C |f_{2^{n-p},[2^p]}\rangle_T |x_{PreCopy}\rangle_A$$

$$= e^{\theta(x)} |x\rangle_I |x_{PreCopy}\rangle_C |f_{2^{n-p},[2^p]}\rangle_T |x_{PreCopy}\rangle_A$$

$$\xrightarrow{U_{Inverse}} e^{\theta(x)} |x\rangle_I |0^{m/3}\rangle_C |0^{m/3}\rangle_T |0^{m/3}\rangle_A$$

$$= \Lambda_n |x\rangle_I |0^{m/3}\rangle_C |0^{m/3}\rangle_T |0^{m/3}\rangle_A$$

Where, $U_{copy,1}$ refers to the suffix copy stage, $U_{GrayInit}$ refers to the Gray initialization stage, $U_{copy,2}U_{copy,1}^\dagger$ refers to the prefix copy stage, $R_2 U_2$ refers to the first processing stage of the Gray cycle stage, $R_{2n-p}U_{2n-p}$ refers to the last processing stage of the Gray cycle stage, and $U_{Inverse}$ refers to the inversion stage. $e^{\theta(x)}$ refers to the phase rotation to be achieved by the diagonal unitary matrix.

From the above analysis, it may be concluded that, when the number of the auxiliary quantum bits being $m \geq 3n$ and m + n = $n_1 n_2$, under restriction of $n1 \times n2$ - grid, the diagonal unitary matrix $\Lambda_n \in \mathbb{C}^{2^n \times 2^n}$ of any $n$-quantum bit may be implemented by a quantum circuit with a circuit depth of $O\left(2^{\frac{n}{3}} + \frac{2^{\frac{n}{2}}}{\sqrt{\min\{n_1,n_2\}}} + \frac{2^n}{m}\right)$.

It may be obtained from further inference that by setting $m + n = n_1 n_2$, given the $m$ ($m \geq 3n$) auxiliary quantum bit and constrained by a $n_1 \times n_2$ -two-dimensional grid, any $n$-quantum bit quantum state $|\psi_v\rangle$ may be prepared by a quantum circuit with a depth of $O\left(2^{n/3} + \frac{2^{n/2}}{\sqrt{\min\{n_1,n_2\}}} + \frac{2^n}{m+n}\right)$.

It is to be understood that, although the steps are displayed sequentially according to the instructions of the arrows in the flowcharts involved by all the embodiments above, these steps are not necessarily performed sequentially according to the sequence instructed by the arrows. Unless otherwise explicitly specified in the present disclosure, execution of the steps is not strictly limited, and the steps may be performed in other sequences. Moreover, at least some of the steps in the flowcharts involved by all the embodiments above may include a plurality of steps or a plurality of stages. The steps or stages are not necessarily performed at the same moment but may be performed at different moments. Execution of the steps or stages is not necessarily performed sequentially, but may be performed alternately with other steps or at least some of sub-steps or stages of other steps.

Based on the same invention concept, an embodiment of the present disclosure further provides an apparatus for generating a quantum state preparation circuit used for implementing the method for generating the quantum state preparation circuit involved above. The implementation solution provided by the apparatus to solve the problem is similar to the implementation solution recorded in the above method. Therefore, the specific limitations in one or more embodiments of the apparatus for generating the quantum state preparation circuit provided below may be referred to in the previous limitations on the method for generating the quantum state preparation circuit, which will not be repeated here.

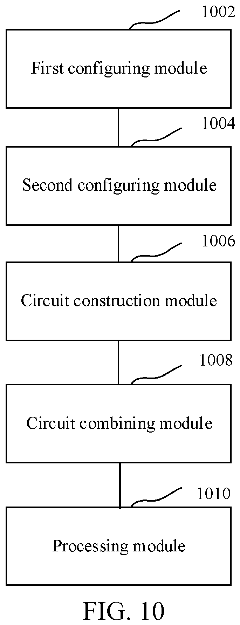

In an embodiment, as shown in FIG. 10, an apparatus for generating a quantum state preparation circuit is provided, and includes: a first configuring module 1002, a second configuring module 1004, a circuit construction module 1006, a circuit combining module 1008, and a processing module 1010.

The first configuring module 1002 is configured to configure, based on circuit preparation parameters of the quantum state preparation circuit, an input register for the quantum state preparation circuit and determine the number of auxiliary quantum bits;

the second configuring module 1004 is configured to configure a copy register and a target register for the quantum state preparation circuit according to the number of the auxiliary quantum bits;

the circuit construction module 1006 is configured to obtain a diagonal unitary matrix quantum circuit by performing circuit construction through the input register, the copy register and the target register according to a quantum bit copy mode, the quantum bit copy mode being obtained based on a grid restriction condition;

the circuit combining module 1008 is configured to combine the diagonal unitary matrix quantum circuit and a single bit quantum gate to obtain at least one uniformly controlled gate circuit corresponding to the diagonal unitary matrix quantum circuit; and

the processing module 1010 is configured to generate the quantum state preparation circuit based on the at least one uniformly controlled gate circuit.

According to the above apparatus for generating the quantum state preparation circuit, based on the circuit preparation parameters, the input register can be configured for the quantum state preparation circuit, and the number of the auxiliary quantum bits can be determined. Therefore, based on the number of the auxiliary quantum bits, the configuration of the copy register and the target register may be achieved. Circuit construction is performed through the input register, the copy register and the target register according to the quantum bit copy mode, so that the diagonal unitary matrix quantum circuit can be constructed using a combination technique in response to considering the constraints of the grid restriction condition, then the uniformly controlled gate circuit may be obtained by combining the diagonal unitary matrix quantum circuit and the single bit quantum gate, and the quantum state preparation circuit is generated based on the uniformly controlled gate circuit. In the whole process, the auxiliary quantum bits and the combination techniques are used to realize parallelization of the quantum state preparation circuit under the constraints of the grid restriction condition, so as to obtain the quantum state preparation circuit with a circuit depth being effectively compressed, thereby minimizing the impact of de-coherence.

In an embodiment, the quantum bit copy mode includes column copying of quantum bits under the grid restriction condition to obtain a column copy result, and row copying based on the column copy result.

In an embodiment, the input register includes a prefix-part quantum bit and a suffix-part quantum bit. The circuit construction module is further configured to copy the suffix-part quantum bit in the input register according to the quantum bit copy mode to copy the suffix-part quantum bit into the copy register, so as to obtain a suffix copy stage circuit; obtain a Gray initialization stage circuit by performing Gray initialization processing on the suffix-part quantum bit in the copy register and the target register; copy the prefix-part quantum bit in the input register according to the quantum bit copy mode to copy the prefix-part quantum bit into the copy register, so as to obtain a prefix copy stage circuit; obtain a Gray path stage circuit by performing Gray path processing on the prefix-part quantum bit in the copy register and the target register; obtain an inversion processing stage circuit by performing inversion processing based on the suffix copy stage circuit, the Gray initialization stage circuit, the prefix copy stage circuit, and the Gray path stage circuit; and obtain the diagonal unitary matrix quantum circuit based on the suffix copy stage circuit, the Gray initialization stage circuit, the prefix copy stage circuit, the Gray path stage circuit and the inversion processing stage circuit.

In an embodiment, the circuit construction module is further configured to perform column copying on the suffix-part quantum bit in the input register according to the quantum bit copy mode to copy the suffix-part quantum bit onto different quantum bits in the copy register, so as to obtain a first controlled-NOT gate circuit; perform iterative copying on the suffix-part quantum bit that has been copied onto the different quantum bits in the copy register in a row direction until the quantity of the suffix-part quantum bit in the copy register meets a suffix copy stage condition, so as to obtain a second controlled-NOT gate circuit; and obtain the suffix copy stage circuit based on the first controlled-NOT gate circuit and the second controlled-NOT gate circuit.

In an embodiment, the circuit construction module is further configured to obtain a third controlled-NOT gate circuit by implementing a matched objective function on each quantum bit of the target register through the suffix-part quantum bit in the copy register; determine a first phase matching each quantum bit of the target register respectively based on the objective function matching each quantum bit; obtain a first phase rotation circuit by implementing phase rotation of the matched first phase on each quantum bit of the target register; and obtain the Gray initialization stage circuit based on the third controlled-NOT gate circuit and the first phase rotation circuit.

In an embodiment, the circuit construction module is further configured to determine a quantum bit string corresponding to each quantum bit of the target register respectively based on the objective function matching each quantum bit; determine a phase corresponding to the quantum bit string; and take the phase corresponding to the quantum bit string as the first phase matching the quantum bit corresponding to the quantum bit string.

In an embodiment, the circuit construction module is further configured to perform restoration processing on a quantum bit undergoing a suffix processing stage in the copy register; perform column copying on the prefix-part quantum bit in the input register according to the quantum bit copy mode to copy the prefix-part quantum bit onto different quantum bits in the copy register, so as to obtain a fourth controlled-NOT gate circuit; perform iterative copying on the prefix-part quantum bit that has been copied onto the different quantum bits in the copy register in a row direction until the quantity of the prefix-part quantum bit in the copy register meets a suffix copy stage condition, so as to obtain a fifth controlled-NOT gate circuit; and obtain the prefix copy stage circuit based on the fourth controlled-NOT gate circuit and the fifth controlled-NOT gate circuit.

In an embodiment, the circuit construction module is further configured to obtain, at each processing stage of Gray path processing, a processing circuit of a current processing stage by implementing objective function transformation matching the current processing stage on each quantum bit of the target register though the prefix-part quantum bit in the copy register; and obtain the Gray path stage circuit based on the processing circuit of each processing stage in Gray path processing.

In an embodiment, the circuit construction module is further configured to determine a quantum bit control bit acting on each quantum bit of the target register and a second phase matching each quantum bit based on objective function transformation matching the current processing stage; obtain an objective function transformation circuit by implementing objective function transformation control through the prefix-part quantum bit in the copy register according to the quantum bit control bit; obtain a second phase rotation circuit by implementing phase rotation of the matched second phase on each quantum bit of the target register; and obtain the processing circuit of the current processing stage based on the objective function transformation circuit and the second phase rotation circuit.

In an embodiment, the second configuring module is further configured to configure an auxiliary register for the quantum state preparation circuit based on the number of the auxiliary quantum bit. The circuit construction module is further configured to copy the prefix-part quantum bit in the input register according to the quantum bit copy mode to copy the prefix-part quantum bit into the copy register and copy the prefix-part quantum bit into the auxiliary register, so as to obtain the prefix copy stage circuit; and obtain the Gray path stage circuit by performing Gray path processing on the prefix-part quantum bit in the copy register, the prefix-part quantum bit in the auxiliary register and the target register.

Based on the same invention concept, an embodiment of the present disclosure further provides a quantum state preparation apparatus used for implementing the quantum state preparation method involved above. The implementation solution provided by the apparatus to solve the problem is similar to the implementation solution recorded in the above method. Therefore, the specific limitations in one or more embodiments of the quantum state preparation apparatus provided below may be referred to in the previous limitations on the quantum state preparation method, which will not be repeated here.

In an embodiment, a quantum state preparation apparatus is provided, and includes: a preparing module, configured to obtain quantum state data by performing quantum state preparation on circuit initial state data based on a quantum state preparation circuit, the quantum state preparation circuit being implemented through the method for generating the quantum state preparation circuit above.

The above quantum state preparation apparatus obtains the quantum state data by performing quantum state preparation on the circuit initial state data through a quantum state preparation circuit with an effectively compressed circuit depth, thereby minimizing the impact of de-coherence.

Each module in the above apparatus for generating the quantum state preparation circuit and the quantum state preparation apparatus may be implemented entirely or partially through software, hardware, or a combination thereof. All the above modules may be embedded in or independent of a processor in a computer device in a hardware form, or stored in a memory in the computer device in a software form for the processor to call and execute the operations corresponding to all the above modules.

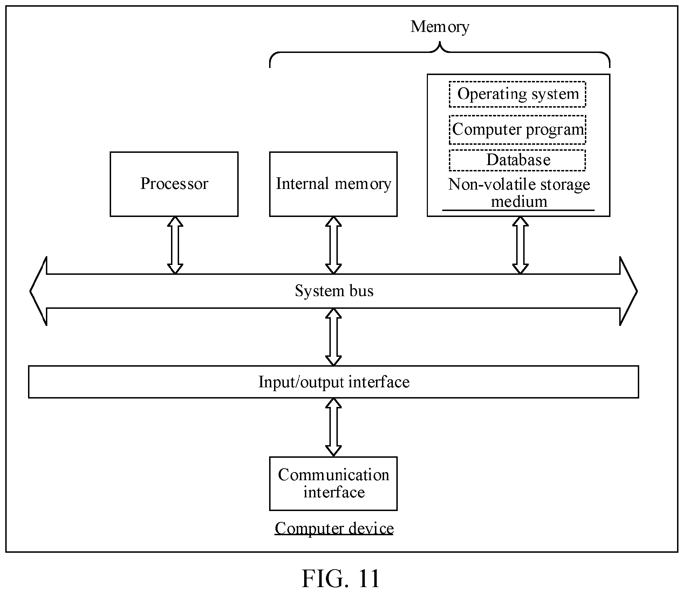

In an embodiment, a computer device is provided. The computer device may be a server, and its internal structure diagram may be shown in FIG. 11. The computer device includes a processor, a memory, an input/output interface (I/O), and a communication interface. The processor, the memory, and the input/output interface are connected through a system bus, and the communication interface is connected to the system bus through the input/output interface. The processor of the computer device is used for providing computation and control ability. The memory of the computer device includes a non-volatile storage medium and an internal memory. The non-volatile storage medium stores an operating system, computer readable instructions and a database. The internal memory provides an operating environment for the operating system and the computer readable instructions in the non-volatile storage medium. The database of the computer device is used for storing data such as circuit preparation parameters. The input/output interface of the computer device is used for exchanging information between the processor and an external device. The communication interface of the computer device is used for connecting to an external terminal through a network connection. The computer readable instructions, when executed by the processor, implement a method for generating a quantum state preparation circuit.

Those skilled in the art may understand that, the structure shown in FIG. 11 is merely a block diagram of a partial structure related to a solution in the present disclosure, and does not constitute a limitation to the computer device to which the solution in the present disclosure is applied. Specifically, the computer device may include more components or fewer components than those shown in the figure, or may combine some components, or may have a different component deployment.

In an embodiment, a computer device is further provided, including a memory and a processor. The memory stores computer readable instructions, and the processor, when executing the computer readable instructions, implements the steps of the embodiments of the method for generating the quantum state preparation circuit above.

In an embodiment, a quantum computer is provided, including a memory and a processor. The memory stores computer readable instructions, and the processor, when executing the computer readable instructions, implements the steps of the embodiments of the quantum state preparation method above.

In an embodiment, a computer-readable storage medium is provided, storing computer readable instructions. The computer readable instructions, when executed by a processor, implement the steps in the method embodiments above.

In an embodiment, a computer program product is provided, including computer readable instructions. The computer readable instructions are stored in a computer readable storage medium. The processor of the computer device reads the computer readable instructions from the computer readable storage medium, and the processor executes the computer readable instructions, so that the computer device executes the steps in the method embodiments above.

In an embodiment, a quantum device is provided. The quantum device implements a quantum state preparation circuit through the method for generating the quantum state preparation circuit above.

The quantum device refers to a device that utilizes a principle of quantum mechanics for computing. Based on a superposition principle of the quantum mechanics and quantum entanglement, the quantum device has strong parallel processing capability and can solve some problems that are difficult to calculate with a classical computer. For example, the quantum device may specifically refer to a quantum computer. For another example, the quantum device may specifically refer to a quantum chip. The quantum chip is a central processing unit of the quantum computer.

Specifically, the quantum device may implement the quantum state preparation circuit by executing a quantum program corresponding to the method for generating the quantum state preparation circuit above. The implementation of the quantum state preparation circuit referred to in this embodiment refers to the implementation of the quantum state preparation circuit on an actual quantum component, that is, the implemented quantum state preparation circuit is a physical circuit.

The above quantum device can obtain a quantum state preparation circuit with an effectively compressed circuit depth, thereby reducing the impact of de-coherence.

Data (including, but are not limited to, data used for analysis, stored data, displayed data, etc.) involved in the present disclosure are all data authorized by a user or fully authorized by all parties, and collection, use and processing of relevant data need to comply with relevant laws, regulations and standards of relevant countries and regions.

Those ordinarily skilled in the art may understand that all or some of procedures of the method in the above embodiments may be implemented by computer readable instructions instructing relevant hardware. The computer readable instructions may be stored in a non-volatile computer-readable storage medium. The computer readable instructions, when executed, may include the procedures of the embodiments of the above method. Any reference to the memory, the database, or other medium used in the embodiments provided in the present disclosure may all include at least one of a non-volatile memory or a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, etc. The volatile memory may include a random access memory (RAM) or an external cache memory, etc. As illustration rather than limitation, RAM may take various forms, such as a static random access memory (SRAM) or a dynamic random access memory (DRAM). The database involved in the embodiments provided by the present disclosure may include at least one of a relational database and a non relational database. The non relational database may include, but are not limited to, a blockchain-based distributed database, etc. The processor involved in the embodiments provided by the present disclosure may be, but is not limited to, a general purpose processor, a central processing unit, a graphics processing unit, a digital signal processor, a programmable logic unit, a data processing logic unit based on quantum computing, etc.

The technical features in the above embodiments may be randomly combined. For concise description, not all possible combinations of the technical features in the above embodiments are described. However, provided that the combinations of the technical features do not conflict with each other, the combinations of the technical features are considered as falling within the scope described in this specification.

The above embodiments merely express several implementations of the present disclosure. The descriptions thereof are relatively specific and detailed, but should not be understood as limitations to the scope of the present disclosure. For those ordinarily skilled in the art, several transformations and improvements can be made without departing from the idea of the present disclosure. These transformations and improvements belong to the protection scope of the present disclosure. Therefore, the protection scope of the patent of the present disclosure shall be subject to the appended claims.

**Claims**

1. A method for generating a quantum state preparation circuit, executable by a computer device, and comprising:

   configuring, based on one or more circuit preparation parameters of the quantum state preparation circuit, an input register for the quantum state preparation circuit and determining a number of auxiliary quantum bits;
   configuring a copy register and a target register for the quantum state preparation circuit according to the number of the auxiliary quantum bits;
   obtaining a diagonal unitary matrix quantum circuit by performing circuit construction through the input register, the copy register and the target register according to a quantum bit copy mode, the quantum bit copy mode being obtained based on a grid restriction condition;
   combining the diagonal unitary matrix quantum circuit and a single bit quantum gate to obtain at least one uniformly controlled gate circuit corresponding to the diagonal unitary matrix quantum circuit; and
   generating the quantum state preparation circuit based on the at least one uniformly controlled gate circuit.

2. The method according to claim 1, wherein the quantum bit copy mode comprises column copying of quantum bits under the grid restriction condition to obtain a column copy result, and row copying based on the column copy result.

3. The method according to claim 1 or 2, wherein the input register comprises a prefix-part quantum bit and a suffix-part quantum bit; and the obtaining the diagonal unitary matrix quantum circuit by performing circuit construction through the input register, the copy register and the target register according to the quantum bit copy mode comprises:

   copying the suffix-part quantum bit in the input register according to the quantum bit copy mode to copy the suffix-part quantum bit into the copy register, to obtain a suffix copy stage circuit;
   obtaining a Gray initialization stage circuit by performing Gray initialization processing on the suffix-part quantum bit in the copy register and the target register;
   copying the prefix-part quantum bit in the input register according to the quantum bit copy mode to copy the prefix-part quantum bit into the copy register, to obtain a prefix copy stage circuit;
   obtaining a Gray path stage circuit by performing Gray path processing on the prefix-part quantum bit in the copy register and the target register;
   obtaining an inversion processing stage circuit by performing inversion processing based on the suffix copy stage circuit, the Gray initialization stage circuit, the prefix copy stage circuit, and the Gray path stage circuit; and
   obtaining the diagonal unitary matrix quantum circuit based on the suffix copy stage circuit, the Gray initialization stage circuit, the prefix copy stage circuit, the Gray path stage circuit and the inversion processing stage circuit.

4. The method according to claim 3, wherein the copying the suffix-part quantum bit in the input register according to the quantum bit copy mode to copy the suffix-part quantum bit into the copy register, to obtain the suffix copy stage circuit comprises:

   performing column copying on the suffix-part quantum bit in the input register according to the quantum bit copy mode to copy the suffix-part quantum bit onto different quantum bits in the copy register, to obtain a first controlled-NOT gate circuit;
   performing iterative copying on the suffix-part quantum bit that has been copied onto the different quantum bits in the copy register in a row direction until a quantity of suffix-part quantum bits in the copy register meets a suffix copy stage condition, to obtain a second controlled-NOT gate circuit; and
   obtaining the suffix copy stage circuit based on the first controlled-NOT gate circuit and the second controlled-NOT gate circuit.

5. The method according to claim 3, wherein the obtaining the Gray initialization stage circuit by performing Gray initialization processing on the suffix-part quantum bit in the copy register and the target register comprises:

obtaining a third controlled-NOT gate circuit by implementing a matched objective function on each quantum bit of the target register through the suffix-part quantum bit in the copy register;
determining a first phase matching each quantum bit of the target register respectively based on the objective function matching each quantum bit;
obtaining a first phase rotation circuit by implementing phase rotation of the matched first phase on each quantum bit of the target register; and
obtaining the Gray initialization stage circuit based on the third controlled-NOT gate circuit and the first phase rotation circuit.

6. The method according to claim 5, wherein the determining the first phase matching each quantum bit of the target register respectively based on the objective function matching each quantum bit comprises:

determining a quantum bit string corresponding to each quantum bit of the target register respectively based on the objective function matching each quantum bit;
determining a phase corresponding to the quantum bit string; and
taking the phase corresponding to the quantum bit string as the first phase matching the quantum bit corresponding to the quantum bit string.

7. The method according to claim 3, wherein the copying the prefix-part quantum bit in the input register according to the quantum bit copy mode to copy the prefix-part quantum bit into the copy register, to obtain the prefix copy stage circuit comprises:

performing restoration processing on a quantum bit undergoing a suffix processing stage in the copy register;
performing column copying on the prefix-part quantum bit in the input register according to the quantum bit copy mode to copy the prefix-part quantum bit onto different quantum bits in the copy register, to obtain a fourth controlled-NOT gate circuit;
performing iterative copying on the prefix-part quantum bit that has been copied onto the different quantum bits in the copy register in a row direction until a quantity of prefix-part quantum bits in the copy register meets a suffix copy stage condition, to obtain a fifth controlled-NOT gate circuit; and
obtaining the prefix copy stage circuit based on the fourth controlled-NOT gate circuit and the fifth controlled-NOT gate circuit.

8. The method according to claim 3, wherein the obtaining the Gray path stage circuit by performing Gray path processing on the prefix-part quantum bit in the copy register and the target register comprises:

obtaining, at each processing stage of Gray path processing, a processing circuit of a current processing stage by implementing objective function transformation matching the current processing stage on each quantum bit of the target register though the prefix-part quantum bit in the copy register; and
obtaining the Gray path stage circuit based on the processing circuit of each processing stage in Gray path processing.

9. The method according to claim 8, wherein the obtaining the processing circuit of the current processing stage by implementing objective function transformation matching the current processing stage on each quantum bit of the target register though the prefix-part quantum bit in the copy register comprises:

determining a quantum bit control bit acting on each quantum bit of the target register and a second phase matching each quantum bit respectively based on objective function transformation matching the current processing stage;
obtaining an objective function transformation circuit by implementing objective function transformation control through the prefix-part quantum bit in the copy register according to the quantum bit control bit;
obtaining a second phase rotation circuit by implementing phase rotation of the matched second phase on each quantum bit of the target register; and
obtaining the processing circuit of the current processing stage according to the objective function transformation circuit and the second phase rotation circuit.

10. The method according to claim 9, wherein the quantum bit control bit is at least one quantum bit in the prefix-part quantum bit; and the obtaining the objective function transformation circuit by implementing objective function transformation control through the prefix-part quantum bit in the copy register according to the quantum bit control bit comprises:
selecting, for each quantum bit of the target register and based on the quantum bit control bit acting on the targeted quantum bit, at least one copied prefix-part quantum bit from the copy register to act on the targeted quantum bit.

11. The method according to claim 3, wherein the obtaining the inversion processing stage circuit by performing inversion processing based on the suffix copy stage circuit, the Gray initialization stage circuit, the prefix copy stage circuit, and the Gray path stage circuit comprises:

obtaining an inversion circuit corresponding to the suffix copy stage circuit, an inversion circuit corresponding to the Gray initialization stage circuit, an inversion circuit corresponding to the prefix copy stage circuit, and an inversion circuit corresponding to the Gray path stage circuit by performing inversion processing on the suffix copy stage circuit, the Gray initialization stage circuit, the prefix copy stage circuit, and the Gray path stage circuit respectively; and
obtaining the inversion processing stage circuit by combining the inversion circuit corresponding to the suffix copy stage circuit, the inversion circuit corresponding to the Gray initialization stage circuit, the inversion circuit corresponding to the prefix copy stage circuit, and the inversion circuit corresponding to the Gray path stage circuit.

12. The method according to claim 3, further comprising:

configuring an auxiliary register for the quantum state preparation circuit based on the number of the auxiliary quantum bits, wherein
the copying the prefix-part quantum bit in the input register according to the quantum bit copy mode to copy the prefix-part quantum bit into the copy register, to obtain the prefix copy stage circuit comprises:

copying the prefix-part quantum bit in the input register according to the quantum bit copy mode to copy the prefix-part quantum bit into the copy register and copy the prefix-part quantum bit into the auxiliary register, to obtain the prefix copy stage circuit; and
the obtaining the Gray path stage circuit by performing Gray path processing on the prefix-part quantum bit in the copy register and the target register comprises:
obtaining the Gray path stage circuit by performing Gray path processing on the prefix-part quantum bit in the copy register, the prefix-part quantum bit in the auxiliary register and the target register.

13. The method according to claim 12, wherein the obtaining the Gray path stage circuit by performing Gray path processing on the prefix-part quantum bit in the copy register, the prefix-part quantum bit in the auxiliary register and the target register comprises:

obtaining, at each processing stage of Gray path processing, a processing circuit of a current processing stage by implementing objective function transformation matching the current processing stage on each quantum bit of the target register though the prefix-part quantum bit in the copy register and the prefix-part quantum bit in the auxiliary register; and
obtaining the Gray path stage circuit based on the processing circuit of each processing stage in Gray path processing.

14. A quantum state preparation method, executable by a quantum computer, and comprising:
obtaining quantum state data by performing quantum state preparation on circuit initial state data based on a quantum state preparation circuit, the quantum state preparation circuit being implemented through the method for generating the quantum state preparation circuit according to any one of claims 1 to 13.

15. An apparatus for generating a quantum state preparation circuit, comprising:

a first configuring module, configured to configure, based on one or more circuit preparation parameters of the quantum state preparation circuit, an input register for the quantum state preparation circuit and determine the number of auxiliary quantum bits;
a second configuring module, configured to configure a copy register and a target register for the quantum state preparation circuit according to the number of the auxiliary quantum bits;
a circuit construction module, configured to obtain a diagonal unitary matrix quantum circuit by performing circuit construction through the input register, the copy register and the target register according to a quantum bit copy mode, the quantum bit copy mode being obtained based on a grid restriction condition;

a circuit combining module, configured to combine the diagonal unitary matrix quantum circuit and a single bit quantum gate to obtain at least one uniformly controlled gate circuit corresponding to the diagonal unitary matrix quantum circuit; and

a processing module, configured to generate the quantum state preparation circuit based on the at least one uniformly controlled gate circuit.

16. A quantum state preparation apparatus, comprising:

a preparing module, configured to obtain quantum state data by performing quantum state preparation on circuit initial state data based on a quantum state preparation circuit, the quantum state preparation circuit being implemented through the method for generating the quantum state preparation circuit according to any one of claims 1 to 13.

17. A computer device, comprising a memory and a processor, the memory storing a computer readable instruction, and the processor, when executing the computer readable instruction, implementing operations of the method according to any one of claims 1 to 14.

18. A computer-readable storage medium, storing a computer readable instruction, the computer readable instruction, when executed by a processor, implementing operations of the method according to any one of claims 1 to 14.

19. A computer program product, comprising a computer readable instruction, the computer readable instruction, when executed by a processor, implementing operations of the method according to any one of claims 1 to 14.

20. A quantum device, implementing a quantum state preparation circuit through the method for generating the quantum state preparation circuit according to any one of claims 1 to 13.

FIG. 1

Quantum bit   ◇ Adjustable coupler

FIG. 2

302

Configure, based on circuit preparation parameters of a quantum state preparation circuit, an input register for the quantum state preparation circuit and determine the number of auxiliary quantum bits

304

Configure a copy register and a target register for the quantum state preparation circuit according to the number of the auxiliary quantum bits

306

Obtain a diagonal unitary matrix quantum circuit by performing circuit construction through the input register, the copy register and the target register according to a quantum bit copy mode, the quantum bit copy mode being obtained based on a grid restriction condition

308

Combine the diagonal unitary matrix quantum circuit and a single bit quantum gate to obtain a uniformly controlled gate circuit corresponding to the diagonal unitary matrix quantum circuit

310

Generate the quantum state preparation circuit based on the at least one uniformly controlled gate circuit

FIG. 3

$q_{1,1}$  $q_{1,2}$  $q_{1,3}$  $q_{1,n2}$-1  $q_{1,n2}$

...

...

...

$q_{n1,1}$  $q_{n1,2}$  $q_{n1,3}$  $q_{n1,n2-1}$  $q_{n1,n2}$

...

FIG. 4

...

$R_2$  $R_3$  $R_{n-1}$  $R_n$

FIG. 5

$|0>$  V1  V2  V3  ...  ...  Vn
$|0>$
$|0>$
n quantum bit $|0>$
$|0>$
$|0>$

FIG. 6

FIG. 7

FIG. 8

n-quantum bit quantum state

Step 1: Construct a circuit framework

Quantum state preparation circuit

A circuit is composed of uniformly controlled gates $V_1$, $V_2$, ..., $V_n$

Step 2: Decompose each uniformly controlled gate

Three diagonal unitary matrices $\Lambda_n$+four single bit gates

Step 3: Implementation of a diagonal unitary matrix

Generate all phases $\alpha_s$ corresponding to $2^n$ bit strings s

Quantum circuit of diagonal unitary matrix $A_n$

Step 3.1    Suffix copy stage

Step 3.2    Gray initialization stage

Step 3.3    Prefix copy stage

Step 3.4    Gray cycle stage

Step 3.5    Inversion stage

FIG. 9

1002

First configuring module

1004

Second configuring module

1006

Circuit construction module

1008

Circuit combining module

1010

Processing module

FIG. 10

Memory

Operating system

Computer program

Database

Non-volatile storage medium

Processor

Internal memory

System bus

Input/output interface

Communication interface

Computer device

FIG. 11

<table>
<tr><td colspan="2" align="center">**INTERNATIONAL SEARCH REPORT**</td><td colspan="2">International application No.<br>**PCT/CN2023/084688**</td></tr>
</table>

**A. CLASSIFICATION OF SUBJECT MATTER**

G06N10/00(2022.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 量子, 寄存器, 比特, 矩阵, 网格, 前缀, 后缀, 门, quantum, register, bite, matrix, grid, prefix, postfix, gate

**C. DOCUMENTS CONSIDERED TO BE RELEVANT**

| Category* | Citation of document, with indication, where appropriate, of the relevant passages | Relevant to claim No. |
|---|---|---|
| Y | CN 113592094 A (TENCENT TECHNOLOGY (SHENZHEN) CO., LTD.) 02 November 2021 (2021-11-02)<br>description, paragraphs 0001-0185, and figures 1-8 | 1-20 |
| Y | CN 113614687 A (THE BOARD OF REGENTS OF THE UNIVERSITY OF TEXAS SYSTEM) 05 November 2021 (2021-11-05)<br>description, paragraph 0049, and figures 1-4 | 1-20 |
| A | CN 110428055 A (ALIBABA GROUP HOLDING LTD.) 08 November 2019 (2019-11-08)<br>entire document | 1-20 |
| A | CN 113642279 A (ALIBABA DAMO ACADEMY (HANGZHOU) TECHNOLOGY CO., LTD.) 12 November 2021 (2021-11-12)<br>entire document | 1-20 |
| A | CN 113592093 A (TENCENT TECHNOLOGY (SHENZHEN) CO., LTD.) 02 November 2021 (2021-11-02)<br>entire document | 1-20 |
| A | US 2022067567 A1 (GOOGLE L.L.C.) 03 March 2022 (2022-03-03)<br>entire document | 1-20 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 May 2023** | **15 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

<table>
<tr><td colspan="2" rowspan="2" align="center"><b>INTERNATIONAL SEARCH REPORT</b><br><b>Information on patent family members</b></td><td colspan="2">International application No.</td></tr>
<tr><td colspan="2" align="center"><b>PCT/CN2023/084688</b></td></tr>
</table>

| Patent document cited in search report | | | Publication date (day/month/year) | Patent family member(s) | | | Publication date (day/month/year) |
|---|---|---|---|---|---|---|---|
| CN | 113592094 | A | 02 November 2021 | HK | 40055370 | A0 | 11 March 2022 |
| | | | | WO | 2023010684 | A1 | 09 February 2023 |
| | | | | US | 2023080222 | A1 | 16 March 2023 |
| | | | | HK | 40055370 | A1 | 26 August 2022 |
| | | | | CN | 113592094 | B | 07 June 2022 |
| CN | 113614687 | A | 05 November 2021 | WO | 2020226715 | A2 | 12 November 2020 |
| | | | | WO | 2020226715 | A3 | 17 December 2020 |
| | | | | AU | 2020269140 | A1 | 26 August 2021 |
| | | | | EP | 3921725 | A2 | 15 December 2021 |
| | | | | EP | 3921725 | A4 | 02 November 2022 |
| | | | | IL | 285280 | A | 30 September 2021 |
| | | | | US | 2022100473 | A1 | 31 March 2022 |
| | | | | CA | 3129239 | A1 | 12 November 2020 |
| CN | 110428055 | A | 08 November 2019 | EP | 3785187 | A1 | 03 March 2021 |
| | | | | EP | 3785187 | A4 | 02 March 2022 |
| | | | | TW | 201945962 | A | 01 December 2019 |
| | | | | US | 2019332731 | A1 | 31 October 2019 |
| | | | | US | 11093669 | B2 | 17 August 2021 |
| | | | | JP | 2021520546 | A | 19 August 2021 |
| | | | | JP | 7186797 | B2 | 09 December 2022 |
| | | | | US | 2021350056 | A1 | 11 November 2021 |
| | | | | WO | 2019209628 | A1 | 31 October 2019 |
| CN | 113642279 | A | 12 November 2021 | CN | 113642279 | B | 18 February 2022 |
| CN | 113592093 | A | 02 November 2021 | HK | 40055372 | A0 | 11 March 2022 |
| | | | | HK | 40055372 | A1 | 12 August 2022 |
| | | | | WO | 2023010694 | A1 | 09 February 2023 |
| | | | | US | 2023081903 | A1 | 16 March 2023 |
| | | | | CN | 113592093 | B | 24 May 2022 |
| US | 2022067567 | A1 | 03 March 2022 | CA | 3191400 | A1 | 10 March 2022 |
| | | | | AU | 2021336875 | A1 | 30 March 2023 |
| | | | | WO | 2022051395 | A1 | 10 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210602826X